(19) Europäisches Patentamt
European Patent Office
Office européen des brevets

(11) **EP 4 303 192 A1**

(12) **EUROPEAN PATENT APPLICATION**

(43) Date of publication:
**10.01.2024 Bulletin 2024/02**

(21) Application number: **22306023.7**

(22) Date of filing: **08.07.2022**

(51) International Patent Classification (IPC):
**C02F 1/68** *(2023.01)*    **C02F 9/00** *(2023.01)*
C02F 1/28 *(2023.01)*    C02F 1/32 *(2023.01)*
C02F 1/42 *(2023.01)*    C02F 1/44 *(2023.01)*

(52) Cooperative Patent Classification (CPC):
C02F 1/68; **C02F 9/20;** C02F 1/283; C02F 1/32;
C02F 1/42; C02F 1/444; C02F 2201/005;
C02F 2201/006; C02F 2209/005; C02F 2209/05;
C02F 2209/44; C02F 2301/043; C02F 2301/046;
C02F 2307/10

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Compagnie Gervais Danone**
**75009 Paris (FR)**

(72) Inventors:
• **DI GIOIA, Lodovico**
  **91300 Massy (FR)**

• **JACOB, Paul**
  **91300 Massy (FR)**
• **DESSAUGE, Lucas**
  **91300 Massy (FR)**
• **TORRES ZULUAGA, Juan**
  **91300 Massy (FR)**
• **DICKENS, Anthony Mark James**
  **CB2 9NH Cambridge (FR)**
• **BALCOMBE, Jamie Lewis Robert**
  **CB4 2ZD Cambridge (FR)**

(74) Representative: **Regimbeau**
**20, rue de Chazelles**
**75847 Paris Cedex 17 (FR)**

(54) **SYSTEM FOR PURIFYING AND MODIFYING THE MINERALITY OF AN AQUEOUS LIQUID**

(57)    A system (1, 100, 200, 300, 400) comprising: a tank (2, 102, 202, 302, 402) for storing an aqueous liquid having an amount of minerals; a purifier (3, 103, 203, 303, 403) configured to purify the aqueous liquid without substantially modifying the amount of minerals; a minerality modifying device (12, 112, 212, 312, 412) configured to substantially modify the amount of minerals in the aqueous liquid; an outlet (16, 116, 216, 316, 416) for dispensing the aqueous liquid to a user; a circuit (18, 118, 218, 318, 418) configurable into: i) a purification mode; ii) a minerality modifying mode; and iii) a dispensing mode.

FIG. 1

EP 4 303 192 A1

**Description**

## TECHNICAL FIELD

The present disclosure deals with a system for treating an aqueous liquid.

## BACKGROUND

Known water treatment system includes means for mineralizing and/or demineralizing water before the water is dispensed to a user. These means actually modify the taste of the water. They allow for example to imitate the taste of some marketed mineral waters.

Some water treatment further includes means for purifying water arranged in series with means for mineralizing and/or demineralizing the water. In such systems, the water sequentially flows through the different means. As a consequence, the more the water is purified, the more the amount of minerals in the water changes.

However, in these systems, the water may not be pure enough when a desired level of minerality is reached.

## SUMMARY

A goal of the present disclosure is to provide a system that overcomes the above problem, i.e., a system able to dispense water having a controlled taste and being sufficiently pure.

This goal is achieved by the system as claimed in claim 1.

The system may also include the optional features recited in the dependent claims, taken alone or in combination whenever technically possible.

The invention also concerns the cartridge as defined or as described in claim 12 and/or in any other claims part of claims and/or in any part of the present description and/or adapted thereto.

## DESCRIPTION OF THE DRAWINGS

Further details, features and advantages of the invention are explained in more detail below with the aid of the exemplary embodiments of the invention that are illustrated in the drawings, which include the following figures.

- Figure 1 is a schematic view of a system according to a first embodiment.
- Figures 2, 3, 4 show the system according to the first embodiment configured in different modes.
- Figure 5 is a schematic view of a system according to a second embodiment.
- Figures 6, 7, 8 show the system according to the second embodiment configured in different modes.
- Figure 9 is a schematic view of a system according to a third embodiment.

- Figures 10, 11, 12, 13 show the system according to the third embodiment configured in different modes.
- Figure 14 is a schematic view of a system according to a fourth embodiment.
- Figures 15, 16, 17 show the system according to the fourth embodiment configured in different modes.
- Figure 18 is a schematic view of a system according to a fifth embodiment.
- Figures 19, 20, 21 show the system according to the fifth embodiment configured in different modes.

Similar features have identical numbers in all figures.

## DETAILED DESCRIPTION OF AT LEAST ONE EMBODIMENT

In the present disclosure, "purifying" an aqueous liquid means removing all or a part of at least one contaminant from the aqueous liquid. The amount of contaminants in a purified aqueous liquid shall be lower than the amount of contaminants in the aqueous liquid before purification. In other words, a purification may be partial. Examples of contaminants removed by the purifier are: heavy metals such as lead (Pb), chlorine and disinfection by-products such as trihalomethanes, volatile organic compounds such as odours, organic compounds such as pesticides, pharmaceuticals, endocrine disrupters and microorganisms such as pathogenic protozoa, bacteria, viruses.

In the present disclosure, a "mineral" is defined as any cation selected in the group consisting of Ca, Mg, Na and K and any anion selected in the group consisting in bicarbonates, Cl and $SO_4$.

In the present disclosure, a treatment "substantially" modifying the amount of minerals of any aqueous liquid is defined as a treatment which would increases or decrease the conductivity of a reference aqueous liquid by more than 10 %, the reference aqueous liquid having a conductivity equal to 595 $\mu$S/cm at 25°C before treatment.

In contrast, a treatment which does not "substantially" modifies an amount of minerals of any aqueous liquid is defined in the present disclosure as a treatment which would increases or decrease the conductivity of a reference aqueous liquid by no more than 10 %, the reference aqueous liquid having a conductivity equal to 595 $\mu$S/cm at 25°C before treatment.

The reference aqueous liquid is for example evian® natural mineral water, plain, recognized as having a stable composition, and commonly used as reference or control water.

To check whether a treatment "substantially" modifies or not an amount of minerals in any aqueous liquid, the following protocol can be implemented.

- A reference aqueous liquid is stored in a first tank at 25°C. The first tank is for instance a beaker of 50 mL.

- A conductivity $\chi_1$ of the reference aqueous liquid in the first tank is measured using a measurement system. For example, the measurement system comprises a conductivity probe (WTW TetraCon 925 IDS) coupled with a conductivity meter (WTW Multi 3620 IDS).

- Then, the reference aqueous liquid is inputted in a device implementing the treatment to be checked, under particular treatment parameters, such as time, compositions of active elements in the device etc.

- After being treated by said device, the reference aqueous liquid outputted by the device is collected in a second tank at 25 °C. The second tank is for example a beaker of 50 mL.

- A second conductivity $\chi_2$ of the reference aqueous liquid in the second tank is measured using the same measurement system.

- If $\dfrac{|\chi_2 - \chi_1|}{\chi_1} > 0.1$ then the treatment is considered as a treatment which "substantially" modifies the amount of minerals.

- If $\dfrac{|\chi_2 - \chi_1|}{\chi_1} \leq 0.1$ 0.1 then the treatment is a treatment is considered as a treatment which does not "substantially" modifies the amount of minerals.

In the present disclosure, "demineralizing" an aqueous liquid is defined as a treatment which decreases the conductivity of the aqueous liquid.

In contrast, "mineralizing" an aqueous liquid is defined in the present disclosure as a treatment which increases the conductivity of the aqueous liquid.

## 1) System according to a first embodiment

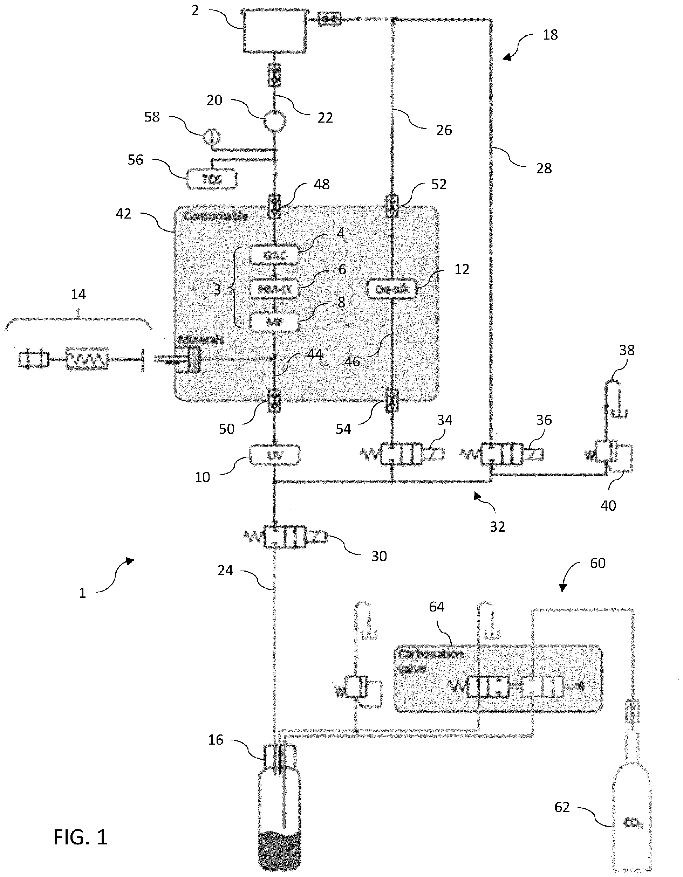

Referring to **figure 1**, a system 1 according to a first embodiment comprises several components an aqueous liquid can flow through, including: a tank 2, at least one purifier 4, 6, 8, 10, at least one minerality modifying device 12, 14 and an outlet 16. The system 1 further comprises a circuit 18 fluidically interconnecting components 2, 4, 6, 8, 10, 12, 14, 16.

## 1.1) Tank / outlet

The tank 2 is designed to store an aqueous liquid. The tank 2 includes an inlet for feeding the tank 2 with aqueous liquid, coming for instance from a tap. The inlet may be closed by a cover or any other suitable closing means.

The tank 2 is preferably a removable element, which may be removed from the system 1 in order to be filled with aqueous liquid away from the system, then put back in the system 1 once it has been filled.

The outlet 16 is designed to output an aqueous liquid out of the system 1. It is used to dispense an aqueous liquid stored in the tank 2 to a user. The outlet 16 may comprise a connector adapted to be releasably and mechanically coupled with an external container, such as a decanter. For instance, the connector includes a thread adapted to be coupled with a neck of the external container.

## 1.2) Purifier(s)

Each purifier of the system 1 is a device configured to purify an aqueous liquid without substantially modifying an amount of minerals of the aqueous liquid. The system 1 according to the first embodiment actually comprises several purifiers 4, 6, 8, 10 carrying out this function but having different structures.

A first purifier 4 of the system 1 is an activated carbon (AC). The AC may be configured to remove at least one of the following contaminants from the aqueous liquid: chlorine, at least one disinfection by-products, at least one VOC, at least one organic pollutant, at least one heavy metal. The activated carbon is granular (GAC). Alternatively, the activated carbon could be in the form of a felt or pellets or carbon block.

A second purifier 6 of the system 1 is an ion exchange resin or adsorption media or chelating media (HM-IX). The second purifier 6 may be configured to remove at least one of the following contaminants from the aqueous liquid: at least one heavy metal, at least one microbiological contaminant.

A third purifier 8 of the system 1 is a microfilter (MF). The microfilter is configured to capture particles present in the aqueous liquid and/or released by at least one other purifier, such as the first purifier 4 and the second purifier 6.

The first purifier (AC), the second purifier (HM-IX) and the third purifier (MF) can form a purification system 3. In the purification system 103, the first purifier, the second purifier and the third purifier may be arranged in series, in that order.

In accordance with the definition provided above, the purification system 103 is configured to increases or decrease the conductivity of a reference aqueous liquid by no more than 10 %, the reference aqueous liquid having a conductivity equal to 595 $\mu$S/cm at 25°C before purification. Preferably, the purification system 103 is configured to increases or decrease the conductivity of the reference aqueous liquid as described above by no more than 5 %.

A fourth purifier 10 of the system 1 is a UV light configured to irradiate the aqueous liquid with an UV radiation, the UV radiation preferably having a wavelength in the range going from 230 to 290 nanometers.

## 1.3) Minerality modifying device(s)

Each minerality modifying device 12, 14 of the system 1 is configured to modify an amount of minerals of an aqueous liquid. The amount of minerals may be modified in two different ways: it may be decreased or increased.

A first minerality modifying device of the system 1 according to the first embodiment is a demineralizer 12. In accordance with the definition provided above, the demineralizer 12 is configured to decrease the conductivity of an aqueous liquid.

The demineralizer 12 may be further configured to decrease the pH of the aqueous liquid. In other words, an aqueous liquid flowing through the demineralizer 12 is acidified and demineralized.

The demineralizer 12 may comprise a dealkalization resin arranged to capture calcium and magnesium cations associated with bicarbonate anions, such as a weak acid cation resin (WAC). The dealkalization resin does not require a waste line in contrast with a reverse osmosis (RO) system. Therefore, using the dealkalization resin instead of a reverse osmosis system for demineralizing an aqueous liquid avoids wasting water.

Alternatively, the demineralizer may comprise a decationization resin or a deanionization resin, such as strong acid cation (SAC) resin, a weak base anion resin (WBA) or a strong base anion resin (SBA). Such resins may also be combined and arranged in any order, to capture calcium and magnesium cations associated with bicarbonate anions or all cations and some or all anions.

A second minerality modifying device of the system 1 is a mineralizer 14. In accordance with the definition provided above, the mineralizer 12 is configured to increase the conductivity of an aqueous liquid.

The mineralizer 14 is a liquid mineralizer, i.e., stores a liquid mineral concentrate to be mixed with an aqueous liquid. For example, the liquid mineral is stored in a cylinder having an outlet, and the mineralizer 14 further comprises a plunger mobile relative to the cylinder. The liquid mineral can be expelled by the outlet by moving the plunger in translation relative to the cylinder. The mineralizer 14 further comprises an actuator for moving the plunger relative to the cylinder. The actuator may comprise a stepper motor coupled with a lead screw assembly.

The liquid mineral concentrate may comprise any inorganic or organic salts. More particularly, the liquid mineral concentrate may comprise a material selected from the group consisting of: sodium or potassium bicarbonate; sodium or potassium carbonate; calcium or magnesium bicarbonate; calcium, magnesium, sodium or potassium chloride; magnesium, sodium or potassium sulfate, and combinations thereof. Optionally, the liquid mineral concentrate may comprise of trace elements beneficial for health such as zinc, selenium, copper and/or vitamins.

### 1.4) Circuit

The circuit 18 comprises a collection of pipes interconnecting the different components of the system 1.

The circuit 18 further comprises a pump 20 configured to circulate the aqueous liquid, so that the aqueous can reach and be treated by the different components of the system 1. When the pump 20 is switched off, any aqueous liquid present in the system 1 stagnates.

The circuit 18 comprises pipes defining a main line 22. The main line 22 includes the tank 2, the first purifier 4, the second purifier 6, the third purifier 8 arranged in series, in that order. Fewer purifiers may be included in the main line 22, and their order may be different. Purifiers 4 and 6 can also be mixed. In addition, the pump 20 is included in the main line 22, for example between the tank 2 and the first purifier 4 as shown in figure 1.

The outlet of the mineralizer 14 is also fluidically connected to the main line 22, for instance between the third purifier 8 and the fourth purifier 10 as shown in figure 1, or elsewhere in other embodiments.

The circuit 18 further defines a dispense line 24 distinct from the main line 22. The dispense line 24 includes the outlet 16 of the system 1.

The circuit 18 further defines two return lines 26, 28. The return lines 26, 28 include a minerality modifying line 26 and a bypass line 28. The tank 2 is arranged in output of each of the two return lines. The minerality modifying line 26 includes the demineralizer 12.

The circuit 18 further comprises a dispense valve 30 between the main line 22 and the dispense line 24. The dispense valve 30 is configurable into an open position wherein the main line 22 and the dispense line 24 are fluidically connected by the dispense valve 30, thereby allowing an aqueous liquid flowing in the main line 22 to reach the outlet 16. The dispense valve 30 is also configurable into a closed position which fluidically isolates the dispense line 24 from the main line 22, thereby preventing an aqueous liquid flowing in the main line 22 from reaching the outlet 16. The dispense valve 30 may for instance be a solenoid valve.

The circuit 18 further comprises a valve assembly 32 selectively redirecting an aqueous liquid flowing in the main line 22 to only one of the two return lines 26, 28 at a time.

More precisely, the valve assembly 32 is configurable into a first position wherein the valve assembly 32 fluidically connects the main line 22 to the minerality modifying line 26, thereby redirects at least a portion of the aqueous liquid in the minerality modifying line 26. Preferably, in the first position, the valve assembly 32 further disconnects the bypass line 28 from the main line 22. As a consequence, 100% of the aqueous liquid coming from the main line 22 and reaching the valve assembly 32 is redirected in the minerality modifying line 26 whenever the valve assembly 32 is set in the first position. Furthermore, the valve assembly 32 is configurable into a second position wherein the valve assembly 32 fluidically connects the main line 22 to the bypass line 28 and disconnects the minerality modifying line 26 from the main line 22. As a consequence, 100% of the aqueous liquid coming from the main line 22 and reaching the valve assembly 32 is redirected in the bypass line 28 whenever the valve assembly 32 is set in the second position.

The valve assembly 32 is configurable into a third position wherein the valve assembly 32 prevents an aqueous liquid contained in the main line 22 from reaching the return lines.

The valve assembly 32 may comprise two valves 34, 36: a first valve 34 controlling access to the mineral modifying line, and a second valve 36 controlling access to the bypass line 28. Each valve may be for instance a solenoid valve. The first position, the second position and the third position of the valve assembly 32 can be obtained by opening or closing the two valves appropriately.

The circuit 18 may further comprise a vent or a drain 38 configured to reduce a pressure in the main line 22, and a pressure relief valve 40 controlling said pressure reduction.

**1.5) Removable cartridge**

The system 1 further comprises a cartridge 42 constituting an item which can be removed from the system 1 and replaced by another cartridge in the system 1. The cartridge 42 comprises at least one purifier of the system 1 and at least one minerality modifying device.

In the first embodiment shown in figure 1, the cartridge 42 comprises a first line 44 and a second line 46 separate from the first line 44.

The first line 44 comprises: a first inlet 48 for inputting the aqueous liquid into the cartridge, at least one purifier (preferably the first purifier 4, the second purifier 6 and the third purifier 8), and a first outlet 50 for outputting the aqueous liquid outside the cartridge 42 once the aqueous liquid has been purified by each purifier included in the cartridge.

The first line further comprises at least a portion of the mineralizer 14. In the first embodiment shown in figure 1, said portion includes the cylinder and the liquid mineral stored therein. In contrast, the actuator is outside the cartridge 42.

The second line 46 comprises: a second inlet 54 for inputting the aqueous liquid into the cartridge, the demineralizer 12, and a second outlet 52 for outputting the aqueous liquid outside the cartridge once the aqueous liquid has been demineralized by the demineralizer 12.

When the cartridge is placed in the system 1, the first line 44 forms a portion of the main line 22, and the second line 46 forms a portion of the minerality modifying line 26.

**1.6) Other components**

The system 1 further comprises a minerality sensor 56 for sensing a parameter depending on the amount of minerals in the aqueous liquid present in the system 1. For instance, the sensed parameter is a conductivity of the aqueous liquid. The cond. is a parameter which indirectly provide information about the amount of minerals in the aqueous liquid. Alternate or supplemental parameters depending on the amount of minerals can be sensed by the minerality sensor 56, such as total dissolved solids (TDS), resistivity, conductance and resistance. In the embodiment shown in figure 1, the minerality sensor 56 is arranged in the main line 22, between the tank 2 and the first purifier 4, but could be located elsewhere in the system 1.

The minerality sensor 56 is configured to sense the parameter repeatedly, for instance periodically.

The system 1 further comprises a temperature sensor 58 for sensing a temperature of the aqueous liquid present in the system 1. In the first embodiment shown in figure 1, the temperature sensor 58 is arranged in the main line 22, between the tank 2 and the first purifier 4, but could by located elsewhere in the system 1 together with sensor 56.

The temperature sensor 58 may be used to correct a temperature-dependent parameter sensed by minerality sensor 56.

The temperature sensor 58 is configured to sense the parameter repeatedly, for instance periodically.

The system 1 further comprises a carbonation system 60 configured to carbonate the aqueous liquid. The carbonation system 1 comprises a carbonation source 62 storing carbon dioxide and a carbonation valve 64 controlling an amount of carbon dioxide stored in the carbonation tank 2 to be mixed with aqueous liquid dispensed to a user via the outlet 16. The carbonation system 1 may further comprise a carbon dioxide vent/drain and/or an air vent/drain designed to reduce pressure in a container mechanically coupled with the outlet 16, and corresponding valves for controlling the vents or drains.

The system 1 further comprises a user interface (not illustrated) allowing a user to interact with the system 1. In particular, the user interface is able to detect that the user requests some of the aqueous liquid present in the system 1.

The system 1 further comprises a controller (not illustrated) configured to receive data from the sensors 56, 58 and from the user interface. The controller is further configured to control the valves 30, 34, 36, 64 of the system 1, the pump 20 and the motor of the mineralizer 14.

**1.7) Functioning modes of the system**

As already said above, a function of the circuit 18 is that of fluidically interconnecting the tank 2, at least one purifier, at least one minerality modifying device and an outlet 16.

The circuit 18 is configurable in different modes implementing different interconnections between some of the components listed above.

### 1.7.1) Idle mode

The circuit 18 is configurable into an idle mode wherein the aqueous liquid stagnates at least in the tank 2.

In the first embodiment shown in figure 1, the idle mode is obtained as follows:

- the dispense valve 30 is closed,
- the carbonation valve is closed,
- the pump 20 is turned off,
- the motor of the mineralizer 14 is turned off.

### 1.7.2) Purification mode

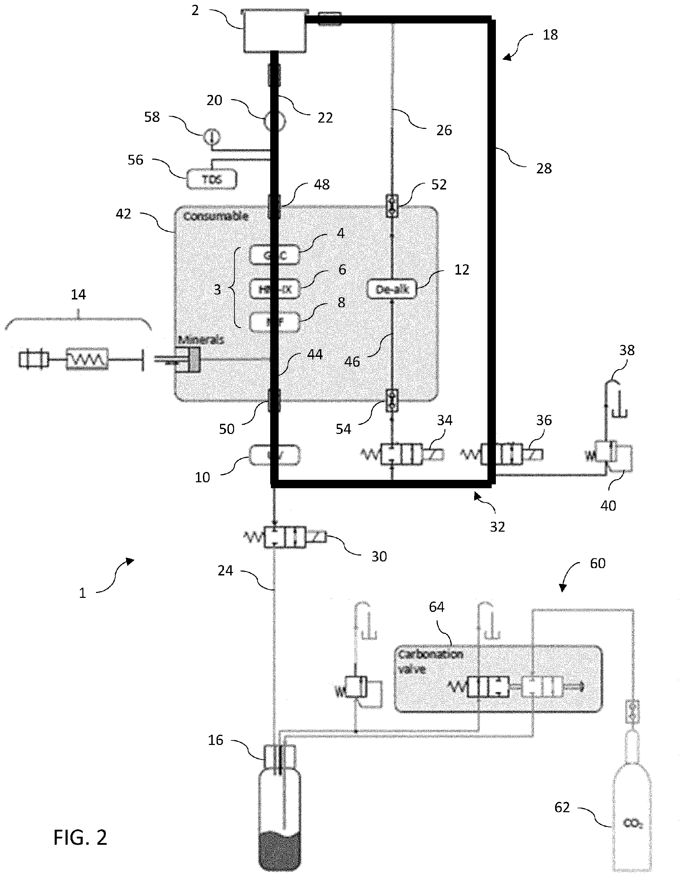

Referring to **figure 2**, the circuit 18 is configurable in a purification mode wherein the circuit 18 forms a first closed loop fluidically connecting at least one purifier to the tank 2, circulates the aqueous liquid in the first closed loop such that the aqueous liquid flows through the purifier and through the tank 2, and prevents the aqueous liquid from reaching the outlet 16 and from substantially modifying the amount of minerals of the aqueous liquid.

In fact, when the circuit 18 is configured in the purification mode, the aqueous liquid flowing in the first closed loop is prevented from reaching any minerality modifying device of the system 1. This is why the amount of mineral of the aqueous liquid does not substantially changes in the purification mode.

In the first embodiment shown in figure 1, the purification mode is obtained as follows:

- the dispense valve 30 is closed,
- the valve assembly 32 is set in the second position (interconnecting the main line 22 and the bypass line 28),
- the carbonation valve is closed,
- the pump 20 is turned on,
- the motor of the mineralizer 14 is turned off.

The first closed loop is actually formed by the main line 22, the valve assembly 32 and the bypass line 28.

In the purification mode, the aqueous liquid stored in the tank 2 flows through the different purifiers arranged in the main line 22, then is redirected to the tank 2 by means of the valve assembly 32 and the bypass line 28. As a consequence, the aqueous liquid is purified, but the amount of minerals of the aqueous liquid does not substantially changes.

### 1.7.3) Minerality modifying mode

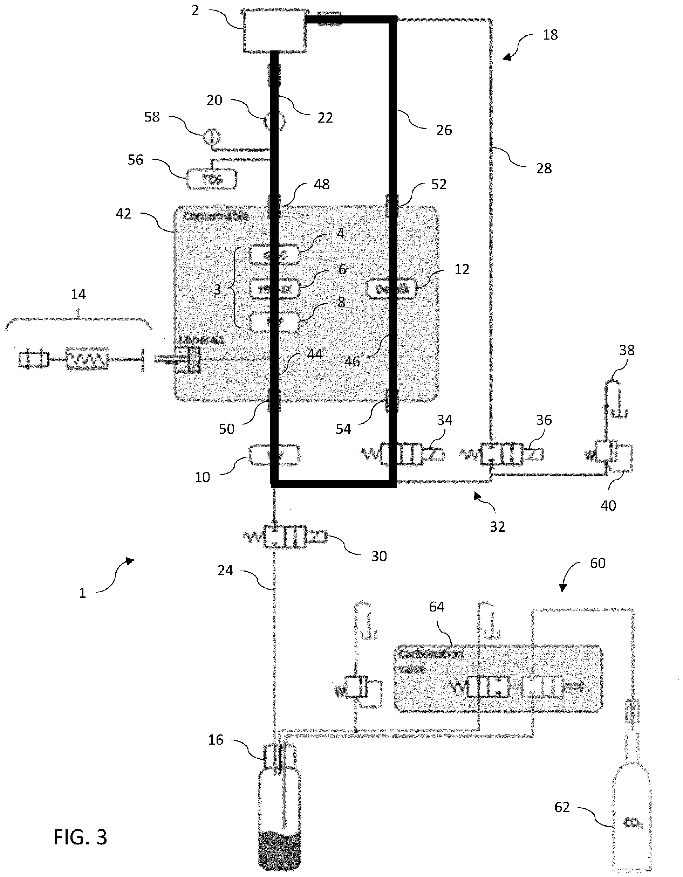

Referring to **figure 3**, the circuit 18 is configurable in a minerality modifying mode wherein the circuit 18 forms a second closed loop fluidically connecting a minerality modifying device of the system 1 to the tank 2, circulates the aqueous in the second closed loop such that the aqueous liquid flows through the minerality modifying device and through the tank 2, and prevents the aqueous liquid from reaching the outlet 16.

More precisely, the minerality modifying mode is a demineralization mode, which means that the minerality modifying device included in the second closed loop is the demineralizer 12. Besides, in the demineralization mode, the aqueous liquid is not mineralized by the mineralizer 14.

In the first embodiment shown in figure 1, the purification mode is obtained as follows:

- the dispense valve 30 is closed,
- the valve assembly 32 is set in the first position (interconnecting the main line 22 and the minerality modifying line 26),
- the carbonation valve is closed,
- the pump 20 is turned on,
- the motor of the mineralizer 14 is turned off.

The second closed loop is actually formed by the main line 22, the valve assembly 32 and the minerality modifying line 26.

In the minerality modifying mode, the aqueous liquid stored in the tank 2 flows through the different purifiers arranged in the main line 22, then is redirected to the demineralizer 12 then to the tank 2 by means of the valve assembly 32 and the minerality modifying line 26. As a consequence, the aqueous liquid is not only purified but its amount of minerals of decreased by the demineralizer 12.

### 1.7.4) Dispensing mode

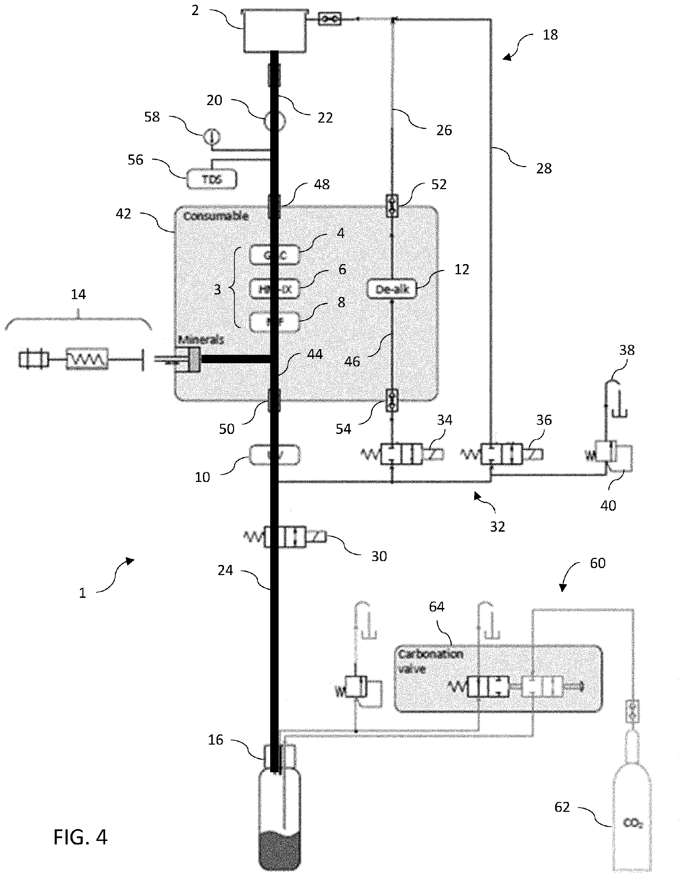

Referring to **figure 4**, the circuit 18 is further configurable into a dispensing mode wherein the circuit 18 forms a path fluidically connecting the tank 2 to the outlet 16, such that the aqueous liquid flows from the tank 2 to the outlet 16.

In the first embodiment shown in figure 1, the dispensing mode is obtained as follows:

- the dispense valve 30 is open,
- the valve assembly 32 is set in the third position (wherein the valve assembly 32 prevents an aqueous liquid contained in the main line 22 from reaching the return lines.),
- the pump 20 is turned on.

In the dispensing mode, the motor of the mineralizer 14 may be turned on or off, depending on the target minerality.

The path is actually formed by the main line 22, the dispense valve 30 and the dispense line 24.

In the dispensing mode, the aqueous liquid stored in the tank 2 flows through the different purifiers arranged in the main line 22 and is optionally mixed with the liquid mineral provided by the mineralizer 14 before reaching the outlet 16. In other words, the aqueous liquid is purified again and its amount of minerals is optionally increased by the mineralizer 14 before being dispensed to a user. Besides, the aqueous liquid may also be carbonated using the carbonation system 60.

**1.7.5) Switching logic between modes**

The controller is in charge of switching the circuit 18 between the modes described above, by controlling the valves, the pump 20 and or the motor. The controller is configured to switch the circuit into the above-mentioned modes by applying the rules explained in the sequence below.

The controller is configured to switch the circuit 18 from the minerality modifying mode to the purification mode once a parameter sensed by the minerality sensor 56 (for example conductivity) has reached a target value.

The controller is configured to switch the circuit 18 from the minerality modifying mode to the purification mode once it detects that circuit 18 has been operating in the minerality modifying mode for a maximum duration. For this purpose, the controller can start a timer when the circuit 18 is switched in the minerality modifying mode and switch the circuit 18 into the purification mode once the value of the timer reaches the maximum duration. The maximum duration is defined in advance and known by the controller.

Besides, the controller is configured to switch the circuit 18 into the dispensing mode whenever the user interface detects that a user requests to be dispensed the aqueous liquid.

The sequence below illustrates how the system may work in practice.

Initially, the circuit 18 is in the idle mode. Then, the system 1 is turned on by a user via the user interface, for instance an on/off button.

The controller determines a target value for the parameter to be sensed by minerality sensor 56. This target value may be equal to a first value sensed by sensor 56 multiplied by a constant lower than 1. For instance, when this constant is 0.5, the target value is 50% of the first value that was sensed.

In an embodiment, the target value is known in advance and stored in a memory of the system 1. In this case the controller merely loads this target value from the memory when the system is turned on. In another embodiment, the target value is computed by the controller. In particular, the target value may be updated from an estimated remaining lifetime of the cartridge 142.

A user feeds the tank 2 with an aqueous liquid, for example water.

Then the controller switches the circuit 18 into the purification mode. This switch may be automatically triggered by the controller upon detecting one of the following events:

- the tank has been removed and then put back in the system 1 with an aqueous liquid therein;
- a user has pressed on a button to dispense water,
- a timer has expired, for example after several hours, such as 2 hours, 5 hours or 24 hours.

Once the circuit 18 is set in the purification mode, the aqueous liquid stored in the tank 2 starts flowing in the first closed loop formed by the main line 22 and the bypass line 28. From this point on, the system 1 keeps on purifying the aqueous liquid, but its amount of minerals is not substantially modified by the system 1, since the aqueous liquid is prevented from reaching the demineralizer 12 and the mineralizer 14.

In the meantime, the controller collects data provided by the temperature sensor 58 and the minerality sensor 56.

If the parameter value sensed by the minerality sensor 56 is different from the target value, the controller switches the circuit 18 into the minerality modifying mode and starts a timer (this timer is for example included in the controller). From this point on, the aqueous liquid circulates in the second closed loop including the demineralizer 12 and is therefore demineralized before returning to the tank 2.

Then, the controller switches the circuit 18 into the idle mode once at least one of the following conditions is met:

- the minerality sensor 56 senses a parameter value reaches the target value,
- the timer indicates that the time spent by the circuit 18 in the minerality modifying mode has reached the maximum duration.

From this point on, the system 1 may switch from idle to purification mode when a predefined standby time is reached.

Later on, the controller switches the circuit 18 from the idle mode to the dispensing mode whenever the user interface detects that a user requests to be dispensed the aqueous liquid. The aqueous liquid flows through the path formed by the main line and the dispense line.

At this stage, the mineralizer 14 may be used to mineralize the aqueous flowing through the main line 22, before reaching the outlet 16. The aqueous liquid is optionally carbonated using the carbonation system 60.

The mineralizer 14 may be left unused to mineralize the aqueous liquid in the dispense mode if the time spent in the minerality modifying mode has reached the maximum duration. Otherwise, the mineralizer 14 may be used.

**2) System according to a second embodiment**

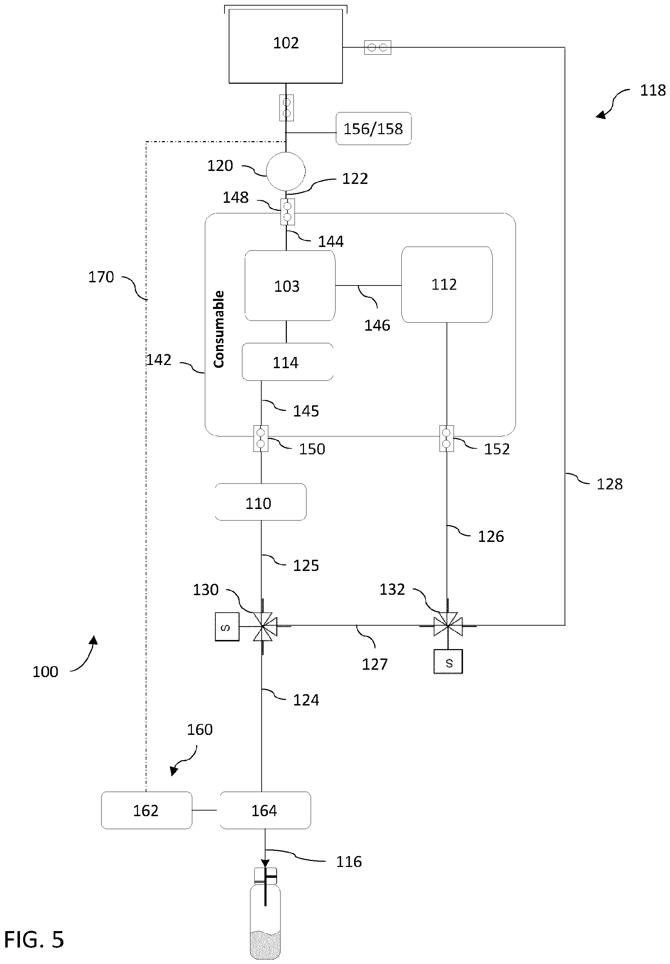

A system 100 according to a second embodiment is shown in **figure 5.**

Like the system 1 according to the first embodiment, the system 100 according to the second embodiment comprises:

- a tank 102 for storing an aqueous liquid,
- a purification system 103 configured to purify the aqueous liquid without substantially modifying the amount of minerals of the aqueous liquid,
- a demineralizer 112 and a mineralizer 114,
- an outlet 116 for dispensing the aqueous liquid to a user, and
- a circuit 118.

**2.1) Tank / outlet**

The tank 102 has the same function as the tank 2 in system 1 and may have the same structure.
The outlet 116 has the same function as the outlet 16 in system 1 and may have the same structure.

**2.2) Purifier(s)**

The purification system 103 as the same function as purification system 3 of system 1 and may have the same structure.
The system further comprises an UV light 110. The UV light 110 has the same function as the UV light 10 of system 1 and may have the same properties.

**2.3) Minerality modifying device(s)**

The demineralizer 112 has the same function as the demineralizer 12 of system 1 and may have the same structure.
The demineralizer 112 is configured to decrease the pH of the aqueous liquid. In other words, an aqueous liquid flowing through the demineralizer 12 is acidified and demineralized.
Besides, the mineralizer 114 has the same function as the mineralizer 14. However, it is to be noted that the mineralizer 114 is configured to increase the amount of minerals in an aqueous liquid only if the aqueous liquid has a pH lower than a threshold. For example, the demineralizer may increase the amount of minerals in an aqueous liquid only if the aqueous liquid is acidic (in this case the pH threshold is below 7).
The mineralizer 114 may be a solid mineralizer, i.e. stores a solid mineral arranged to dissolve an aqueous liquid flowing through the solid mineralizer 14, thereby mineralizing said aqueous liquid. This dissolution occurs only if the aqueous liquid has a pH lower than the above-mentioned threshold.
The mineralizer may further comprise a microfilter arranged downstream the solid mineral and configured to capture particles released by the solid mineral.

**2.4) Circuit**

The circuit 118 comprises a pump 120. The pump 120 has the same function as pump 20 of system 1 and may have the same structure.
The circuit 118 comprises pipes defining a main line 122. The main line 122 includes the tank 102 and the purifying system 103 arranged in series. In addition, the pump 120 is included in the main line 122, for example between the tank 102 and the purifying system 103 as shown in figure 5.
The circuit 118 further defines a dispensing line 124 including the outlet 116, a demineralizing line 126 including the demineralizer 112, a mineralizing line 125 including the mineralizer 114 and the UV light 110, a first return line 127, and a second return line 128.
The 118 circuit comprises a first 3-way valve 130 located between the mineralization line 125 and the dispense line 124. The first valve 130 is for instance arranged downstream the UV light 110. The first valve 130 is configurable into:

- a first position wherein the first valve 130 fluidically connects the mineralization line 125 to the dispensing line 124, thereby redirecting the aqueous liquid from the mineralization line 125 to the dispensing line 124, and
- a second position wherein the first valve 130 fluidically connects the mineralization line 125 to the first return line 127, thereby redirecting the aqueous liquid from the mineralization line 125 to the first return line 127 and preventing the aqueous liquid from reaching the outlet 116.

The circuit 118 further comprises a second three-way valve 132. The second valve 132 is arranged downstream the demineralizer 112. The second valve 132 is configurable into:

- a first position wherein the second valve 132 fluidically connects the first return line 127 to the second return line 128, thereby redirecting the aqueous liquid from the first return line 127 to the second return line 128, and
- a second position wherein the second valve 132 fluidically connects the demineralization line 126 to the second return line 128, thereby redirecting the aqueous liquid from the demineralization line 126 to the second return line 128.

The circuit 118 may further comprise a vent or a drain configured to reduce a pressure in the main line 122, and a pressure relief valve controlling said pressure reduction.

**2.5) Removable cartridge**

The system 100 further comprises a cartridge 142 constituting an item which can be removed from the system 100 and replaced by another cartridge in the system 100. The cartridge 142 comprises at least one purifier of the system 100 and at least one minerality modifying device.

In the system 100, the cartridge 142 comprises a first line 144, a second line 145 and a third line 146.

The first line 144 comprises: an inlet 148 for inputting the aqueous liquid into the cartridge 142 and at least one purifier arranged upstream the first valve.

The second line 145 comprises the mineralizer 114 and a first outlet 150 for outputting the aqueous liquid outside the cartridge 142 once the aqueous liquid has been purified and mineralized by the cartridge 142.

The third line 146 comprises the demineralizer 112 and a second outlet 152 for outputting the aqueous liquid outside the cartridge 142 once the aqueous liquid has been purified and demineralized by the cartridge 142.

When the cartridge 142 is placed in the system 100, the first line 144 forms a portion of the main line 122, the second line 145 forms a portion of the mineralization line 125 and the third line 146 forms a portion of the demineralization line 126.

## 2.6) Other components

The system 100 further comprises a minerality sensor 156. The minerality sensor 156 has the same function as the sensor 56 of system 1 and may sense the same parameter or a different parameter.

The system 100 further comprises a temperature sensor 158. The temperature sensor 158 has the same function as the temperature sensor 58 of the system 1.

The system 100 further comprises a carbonation system 160. The carbonation system 160 has the same function as the carbonation system 60 of system 1 and may have the same structure. In particular, the carbonation system 160 comprises a carbonation source 162 storing carbon dioxide and a carbonation valve 164 controlling an amount of carbon dioxide stored in the carbonation source 162 to be mixed with aqueous liquid dispensed to a user via the outlet 116.

The system 100 further comprises a user interface (not illustrated) having the same function as the interface of system 1 already discussed above.

The system 100 further comprises a controller (not illustrated) having the same function as the controller of system 1 already discussed above. The controller of system 100 is configured to receive data from the sensors 156, 158 and from the user interface. The controller is further configured to control the valves 130, 132, 164 and the pump 120.

## 2.7) Functioning modes of the system

Like the circuit 18 of system 1, the circuit 118 is configurable in different modes implementing different interconnections between some of the components of system 100.

### 2.7.1) Idle mode

The circuit 118 is configurable into an idle mode wherein the aqueous liquid stagnates at least in the tank 102.

In the system 100, the idle mode is obtained as follows:

- the dispense valve 130 is set in the second position (interconnecting the mineralization line 125 and the first return line 127),
- the valve 132 is set in the second position (interconnecting the first return line 127 and the second return line 128),
- the carbonation valve 164 is closed,
- the pump 120 is turned off.

### 2.7.2) Purification mode

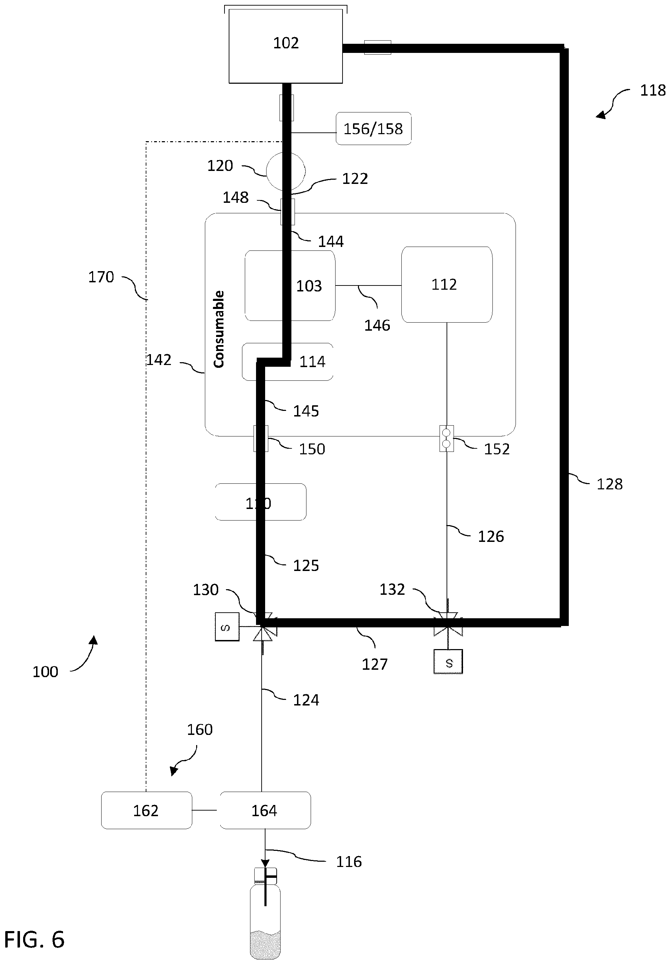

Referring to **figure 6**, the circuit 118 is configurable in a purification mode wherein the circuit 118 forms a first closed loop fluidically connecting at least one purifier (the purification system 103) and the mineralizer 114 to the tank 102, circulates the aqueous liquid in the first closed loop such that the aqueous liquid flows through the purifier (the purification system 103) and through the tank 102, and prevents the aqueous liquid from reaching the outlet 116 and from substantially modifying the amount of minerals of the aqueous liquid.

In fact, when the circuit 118 is configured in the purification mode, the aqueous liquid flowing in the first closed loop is prevented from reaching the demineralizer 112. As a consequence, the demineralizer 112 cannot modify the amount of mineral. Furthermore, it is ensured that the aqueous liquid flowing in the first closed loop has a pH greater than the threshold mentioned above. As a consequence, the mineralizer 114 cannot modify the amount of mineral despite the aqueous liquid flows through the mineralizer 114.

In the system 100, the purification mode is obtained as follows:

- the dispense valve 130 is set in the second position (interconnecting the mineralization line 125 and the first return line 127),
- the valve 132 is set in the second position (interconnecting the first return line 127 and the second return line 128),
- the carbonation valve 164 is closed,
- the pump 120 is turned on.

The first closed loop is actually formed by the main line 122, the mineralization line 125, the first return line 127 and the second return line 128.

In the purification mode, the aqueous liquid stored in the tank 102 flows through the purifying system 103, then the mineralizer 114. Since the aqueous has not a pH lower than the threshold, the solid mineral stored in the mineralizer does not dissolve in the aqueous liquid. Then the aqueous liquid is redirected to the tank 102. As a consequence, the aqueous liquid is purified, but the amount of minerals of the aqueous liquid does not substantially changes.

### 2.7.3) Minerality modifying modes

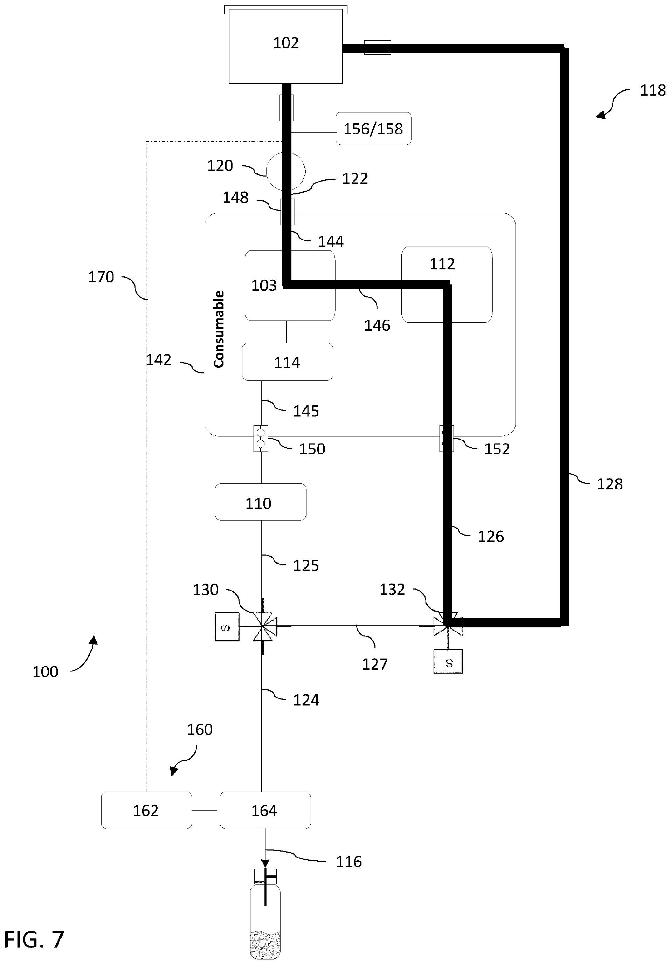

Referring to **figure 7**, the circuit 118 is configurable in a minerality modifying mode wherein the circuit 118 forms a second closed loop fluidically connecting a minerality modifying device of the system 100 to the tank 102, circulates the aqueous in the second closed loop such that the aqueous liquid flows through the minerality modifying device and through the tank 102, and prevents the aqueous liquid from reaching the outlet 116.

More precisely, the minerality modifying mode is a demineralization mode, which means that the minerality modifying device included in the second closed loop is the demineralizer 112. Besides, in the demineralization mode, the aqueous liquid is not mineralized by the mineralizer 114 since it is prevented from reaching the mineralizer 114.

In the system 100, the demineralization mode is obtained as follows:

- the first valve 130 is set in the second position (interconnecting the mineralization line 125 and the first return line 127 and preventing the aqueous liquid from reaching the outlet 116),
- the valve 132 is set in the first position (interconnecting the demineralization line 126 and the second return line 128),
- the carbonation valve 164 is closed,
- the pump 120 is turned on.

The second closed loop is actually formed by the main line 122, the demineralization line 126, the second valve 132 and the second return line 128.

In the demineralization mode, the aqueous liquid stored in the tank 102 flows through the purifying system 103, then is redirected to the demineralizer 112 then to the tank 102 by means of the valve assembly 130 and 132. As a consequence, the aqueous liquid is not only purified but is further acidified by the demineralizer 112 and its amount of minerals is also decreased by the demineralizer 112.

Moreover, the circuit 118 is configurable in a second minerality modifying mode wherein the circuit 118 forms a third closed loop fluidically connecting a second minerality modifying device of the system 100 to the tank 102, circulating the aqueous in the third closed loop such that the aqueous liquid flows through the second minerality modifying device 114 and through the tank 102, and prevents the aqueous liquid from reaching the outlet 116.

The second minerality modifying mode is a mineralization mode, which means that the minerality modifying device included in the third closed loop is the mineralizer 114. Besides, in the mineralization mode the aqueous liquid is not demineralized by the demineralizer 112 since it is prevented from reaching the demineralizer 112.

Furthermore, the third closed loop is actually identical to the first loop (shown in figure 6), but it is ensured the pH of the aqueous liquid is lower than the threshold. This can be obtained after the circuit has spent some time in the demineralization mode (during which the aqueous water has been acidified). As a consequence, the solid mineral included in the mineralizer 114 can dissolve in the aqueous liquid flowing through the mineralizer, thereby increasing the amount of minerals of the aqueous liquid.

### 2.7.4) Dispensing mode

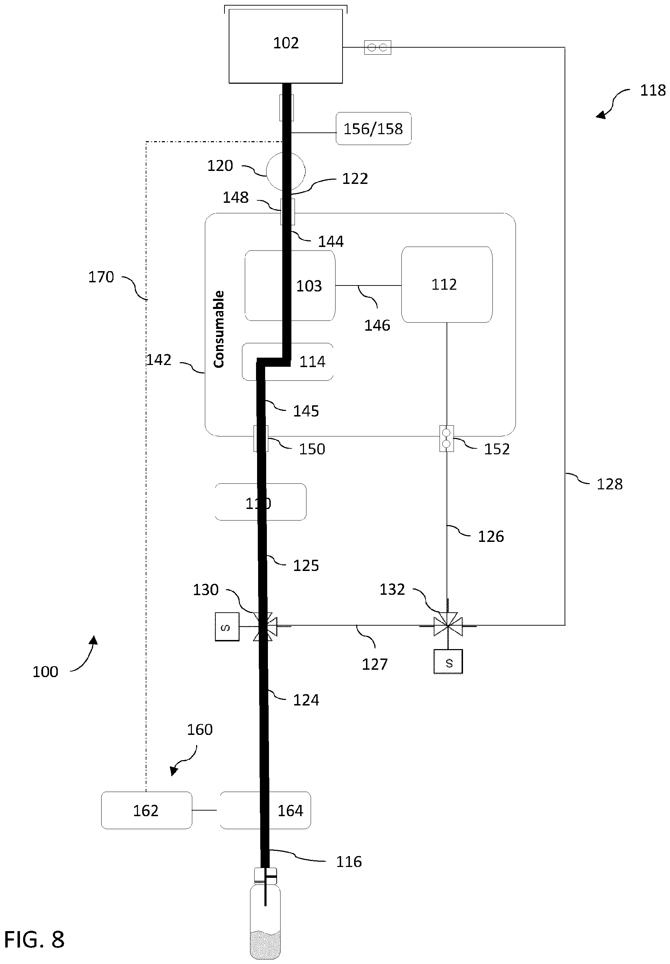

Referring to **figure 8**, the circuit 118 is further configurable into a dispensing mode wherein the circuit 118 forms a path fluidically connecting the tank 102 to the outlet 116, such that the aqueous liquid flows from the tank 102 to the outlet 116.

In the system 100, the dispensing mode is obtained as follows:

- the dispense valve 130 is set in the first position (interconnecting the mineralization line 125 and the dispense line 124),
- the pump 120 is turned on.

The path is actually formed by the main line 122, the dispense valve 130 and the dispense line 124.

In the dispensing mode, the aqueous liquid stored in the tank 102 flows through the purifying system 103 and the mineralizer 114 before reaching the outlet 116. In other words, the aqueous liquid is purified again and its amount of minerals is increased by the demineralizer 114 before being dispensed to a user. Besides, the aqueous liquid is also carbonated using the carbonation system 160.

Optionally, a gas line 170 is bringing carbon dioxide from carbonator to line 122 in order to further increase the aqueous liquid acidity by increasing its carbonic acid content. Consequently, the mineralizer 114 will release more minerals and the aqueous liquid minerality will increase even further.

### 2.7.5) Switching logic between modes

The controller is in charge of switching the circuit 118 between the modes described above, by controlling the valves and the pump 120. The controller is configured to apply the logic described above in section 1.7.5 in relation with the system 1 (first embodiment).

### 3) System according to a third embodiment

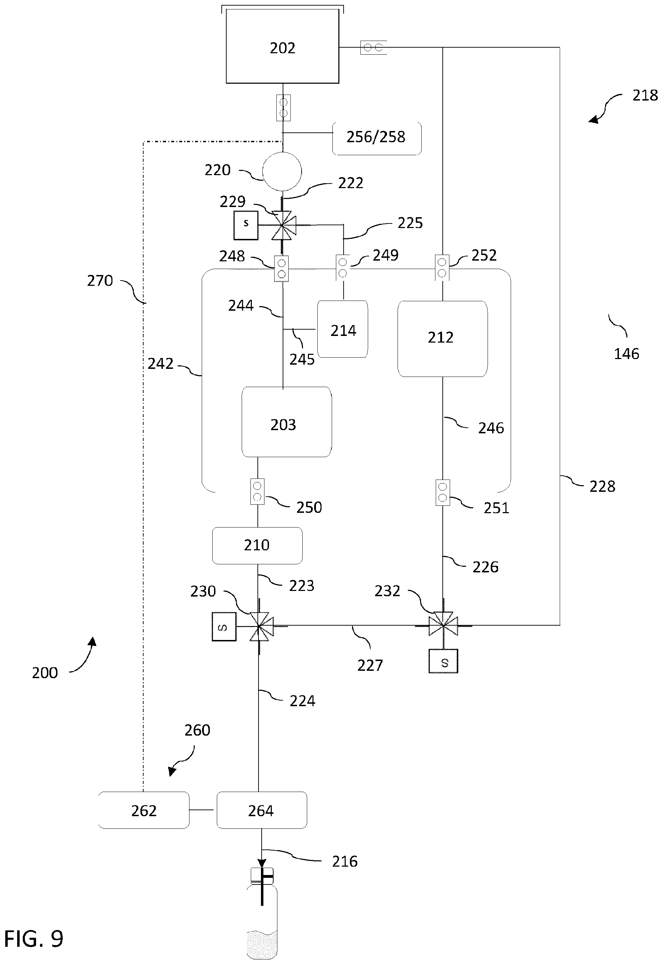

A system 200 according to a third embodiment is shown in **figure 9.**

Like the system 1 according to the first embodiment and the system 100 according to the second embodiment, the system 200 according to the third embodiment comprises:

- a tank 202 for storing an aqueous liquid,
- a purification system 203 configured to purify the aqueous liquid without substantially modifying the amount of minerals of the aqueous liquid,
- a demineralizer 212 and a mineralizer 214,
- an outlet 216 for dispensing the aqueous liquid to a user, and
- a circuit 218.

### 3.1) Tank / outlet

The tank 202 has the same function as the tank 2 in system 1 and may have the same structure.

The outlet 216 has the same function as the outlet 16 in system 1 and may have the same structure.

### 3.2) Purifier(s)

The purification system 203 has the same function as the purification system 3 of system 1 and may have the same structure.

The system further comprises an UV light 210. The UV light 210 has the same function as the UV light 10 of system 1 and may have the same properties.

### 3.3) Minerality modifying device(s)

The demineralizer 212 has the same function as the demineralizer 12 of system 1 and may have the same structure.

Besides, the mineralizer 214 has the same function as mineralizers 14 and may have the same structure. The mineralizer 214 may be a solid mineralizer, like mineralizer 114.

### 3.4) Circuit

The circuit 218 comprises a pump 220. The pump 218 has the same function as pump 20 of system 1 and may have the same structure.

The circuit 218 comprises pipes defining a main line 222. The main line 222 includes the tank 202. In addition, the pump 220 is included in the main line 222.

The circuit 218 further defines a purification line 223 including the purification system 203 and the UV light 210, a dispensing line 224 including the outlet 216, a demineralizing line 226 including the demineralizer 212, a mineralizing line 225 including the mineralizer 214 and the UV light 210, a first return line 227, and a second return line 228.

The output of the mineralization line 225 is fluidically connected to the purification line 223 upstream the purification system 203, such that aqueous liquid flowing in the mineralization line 225 is then redirected to the purification system 203.

The demineralization line 226 returns to the tank 202, as well as the second return line 228.

The circuit 218 further comprises a first 3-way valve 229 configurable into:

- a first position wherein the first valve 229 fluidically connects the main line 222 to the purification line 223, thereby redirecting the aqueous liquid from the main line 222 to the purification line 223, and
- a second position wherein the first valve 229 fluidically connects the main line 222 to the mineralization line 225, thereby redirecting the aqueous liquid from the main line 222 to the mineralization line 225.

The circuit 218 further comprises a second 3-way valve 230 (or dispense valve) located between the purification line 223 and the dispense line 224. The second valve 230 is for instance arranged downstream the UV light 210. The second valve 230 is configurable into:

- a first position wherein the second valve 230 fluidically connects the purification line 223 to the dispensing line 224, thereby redirecting the aqueous liquid from the purification line 223 to the dispensing line 224, and
- a second position wherein the second valve 230 fluidically connects the purification line 223 to the first return line 227, thereby redirecting the aqueous liquid from the purification line 223 to the first return line 227 and preventing the aqueous liquid from reaching the outlet 216.

The circuit 218 further comprises a third 3-way valve 232. The third valve 232 is arranged upstream the demineralizer 212. The third valve 232 is configurable into:

- a first position wherein the third valve 232 fluidically connects the first return line 227 to the second return line 228, thereby redirecting the aqueous liquid from the first return line 227 to the second return line 228, and
- a second position wherein the third valve 232 fluidically connects the first return line 227 to the demineralization line 226, thereby redirecting the aqueous liquid from the first return line 227 to the demineralization line 226.

The circuit 218 may further comprise a vent or a drain configured to reduce a pressure in the main line 222, and a pressure relief valve controlling said pressure reduction.

**3.5) Removable cartridge**

The system 200 further comprises a cartridge 242 constituting an item which can be removed from the system 200 and replaced by another cartridge in the system 200. The cartridge 242 comprises at least one purifier of the system 200 and at least one minerality modifying device, like the cartridge 242.

The cartridge 242 comprises a first line 244, a second line 245 and a third line 246

The first line 244 comprises: a first inlet 248 for inputting the aqueous liquid into the cartridge 242, the purification system 203, and a first outlet 250 for outputting the aqueous liquid outside the cartridge 242 once the aqueous liquid has been purified by the cartridge 242.

The second line 245 comprises: a second inlet 249, the mineralizer 214 and an output connected to the first line 244, such that aqueous liquid entering in the cartridge 242 through the second inlet 249 is mineralized by the mineralizer 214, then is purified by purification 203, then exits the cartridge through the first outlet 250.

The third line 246 is separate from the first line 244 and from the second line 245 in the cartridge 242. The third line 246 comprises: a third inlet 251, the demineralizer 212 and a second outlet 252 for outputting the aqueous liquid outside the cartridge 242 once the aqueous liquid has been demineralized by the cartridge 242.

When the cartridge is placed in the system 1, the first line 244 forms a portion of the purification line 223, the second line 245 forms a portion of the mineralization line 225 and the third line 246 forms a portion of the demineralization line 226.

**3.6) Other components**

The system 200 further comprises a minerality sensor 256. The minerality sensor 256 has the same function as the sensor 56 of system 1 and may sense the same parameter or a different parameter.

The system 200 further comprises a temperature sensor 258. The temperature sensor 258 has the same function as the temperature sensor 58 of the system 1.

The system 200 further comprises a carbonation system 260. The carbonation system 260 has the same function as the carbonation system 60 of system 1 and may have the same structure. In particular, the carbonation system 260 comprises a carbonation source 262 storing carbon dioxide and a carbonation valve 264 controlling an amount of carbon dioxide stored in the carbonation source 262 to be mixed with aqueous liquid dispensed to a user via the outlet 216.

The system 200 further comprises a user interface (not illustrated) having the same function as the interface of system 1 already discussed above.

The system 200 further comprises a controller (not illustrated) having the same function as the controller of system 1 already discussed above. The controller of system 200 is configured to receive data from the sensors 256, 258 and from the user interface. The controller is further configured to control the first valve, the valves 230, 232, 264 and the pump 220.

**3.7) Functioning modes of the system**

Like the circuit 18 of system 1, the circuit 218 is configurable in different modes implementing different interconnections between some of the components of system 200.

**3.7.1) Idle mode**

The circuit 218 is configurable into an idle mode wherein the aqueous liquid stagnates at least in the tank 202.

In the system 200, the idle mode is obtained as follows:

* the valve 229 is set in the first position (interconnecting the main line 222 to the purification line 223)
* the dispense valve 230 is set in the second position (interconnecting the purification line 223 and the first return line 227),
* the valve 232 is set in the first position (interconnecting the first return line 227 and the second return line 228),
* the carbonation valve 264 is closed,
* the pump 220 is turned off.

**3.7.2) Purification mode**

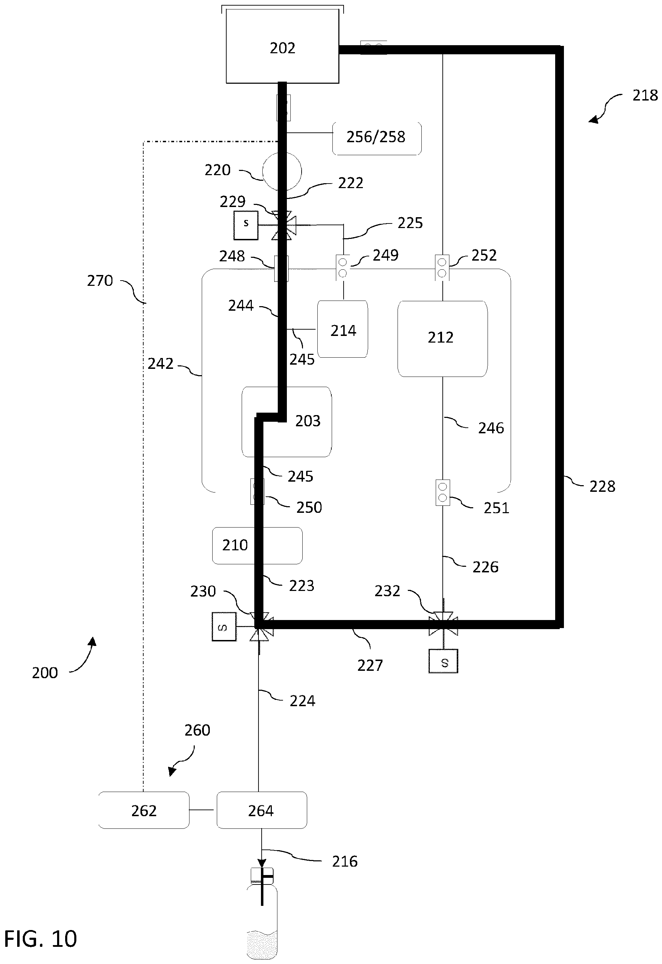

Referring to figure 10, the circuit 218 is configurable in a purification mode wherein the circuit 218 forms a first closed loop fluidically connecting at least one purifier (the purification system 203) to the tank 202, by circulating the aqueous liquid in the first closed loop such that the aqueous liquid flows through the purifier (the purification system 203) and through the tank 202, and prevents the aqueous liquid from reaching the outlet 216 and from substantially modifying the amount of minerals of the aqueous liquid.

In fact, when the circuit 218 is configured in the purification mode, the aqueous liquid flowing in the first closed loop is prevented from reaching the demineralizer 212 and from reaching the mineralizer 214. As a consequence, the demineralizer 212 and the mineralizer cannot modify the amount of mineral of the aqueous liquid flowing in the first closed loop.

In the system 200, the purification mode is obtained as follows:

* the valve 229 is set in the first position (interconnecting the main line 222 and the purification line 223),
* the dispense valve 230 is set in the second position (interconnecting the purification line 223 and the first return line 227),

- the valve 232 is set in the first position (interconnecting the first return line 227 and the second return line 228),
- the carbonation valve 264 is closed,
- the pump 220 is turned on.

The first closed loop is actually formed by the main line 222, the purification line 223, the first return line 227 and the second return line 228.

In the purification mode, the aqueous liquid stored in the tank 202 flows through the purifying system 203, then the UV light 210, then is redirected to the tank 202. As a consequence, the aqueous liquid is purified, but the amount of minerals of the aqueous liquid does not substantially changes.

### 3.7.3) Minerality modifying modes

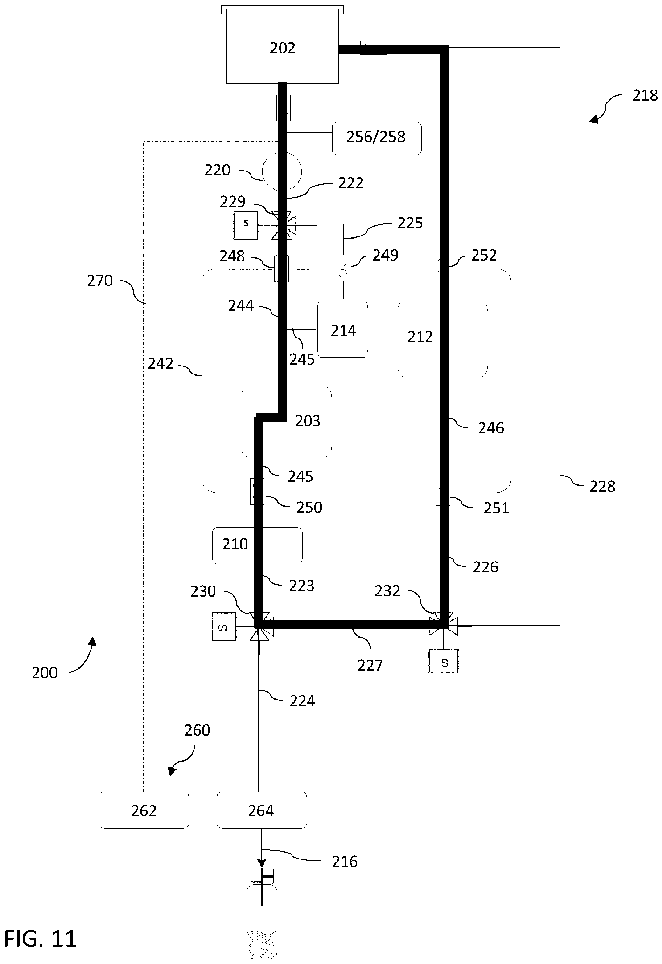

Referring to **figure 11**, the circuit 218 is configurable in a minerality modifying mode wherein the circuit 218 forms a second closed loop fluidically connecting a minerality modifying device of the system 200 to the tank 202, by circulating the aqueous liquid in the second closed loop such that the aqueous liquid flows through the minerality modifying device and through the tank 202 and prevents the aqueous liquid from reaching the outlet 216.

More precisely, the minerality modifying mode is a demineralization mode, which means that the minerality modifying device included in the second closed loop is the demineralizer 212. Besides, in the demineralization mode, the aqueous liquid is not mineralized by the mineralizer 214 since it is prevented from reaching the mineralizer 214.

In the system 200, the demineralization mode is obtained as follows:

- the valve 229 is set in the first position (interconnecting the main line 222 and the purification line 223),
- the dispense valve 230 is set in the second position (interconnecting the purification line 223 and the first return line 227),
- the valve 232 is set in the second position (interconnecting the first return line 227 and the demineralization line 226),
- the carbonation valve 264 is closed,
- the pump 220 is turned on.

The second closed loop is actually formed by the main line 222, the purification line 223, the first return line 227 and the demineralization line 226.

In the demineralization mode, the aqueous liquid stored in the tank 202 flows through the purifying system 203, then through the UV light 210 then through the demineralizer 212 then is redirected to the tank 202. As a consequence, the aqueous liquid is not only purified but its amount of minerals is decreased by the demineralizer 212.

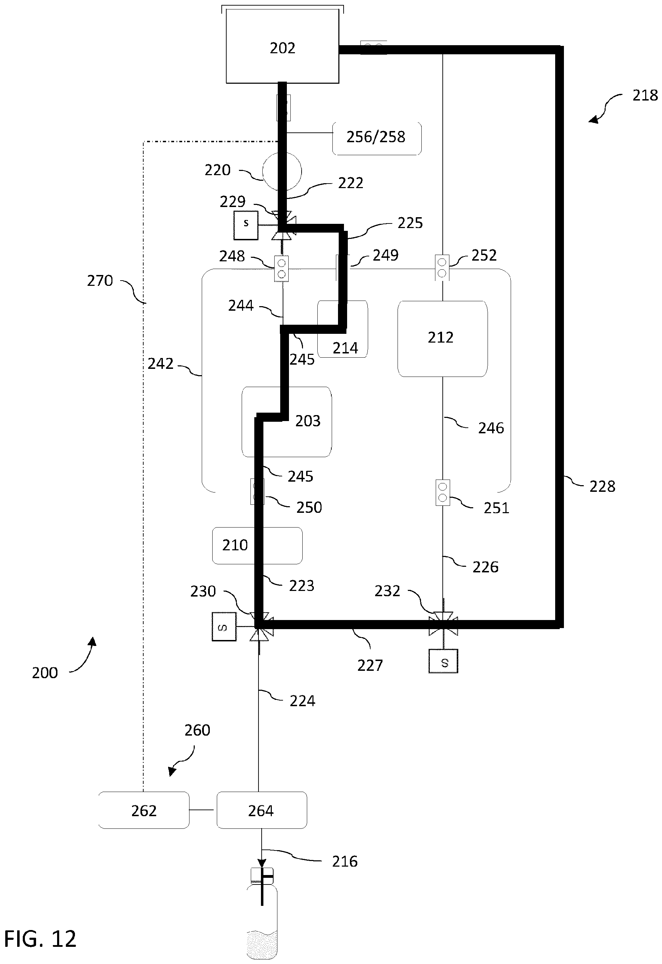

Referring to **figure 12**, the circuit 218 is configurable in a second minerality modifying mode wherein the circuit 218 forms a third closed loop fluidically connecting a second minerality modifying device of the system 200 to the tank 202, by circulating the aqueous liquid in the third closed loop such that the aqueous liquid flows through the second minerality modifying device and through the tank 202 and prevents the aqueous liquid from reaching the outlet 216.

The second minerality modifying mode is a mineralization mode, which means that the minerality modifying device included in the third closed loop is the mineralizer 214. Besides, in the mineralization mode the aqueous liquid is not demineralized by the demineralizer 212 since it is prevented from reaching the demineralizer 212.

In the system 200, the mineralization mode is obtained as follows:

- the valve 229 is set in the second position (interconnecting the main line 222 and the mineralization line 225),
- the dispense valve 230 is set in the second position (interconnecting the purification line 223 and the first return line 227),
- the valve 232 is set in the first position (interconnecting the first return line 227 and the second return line 228),
- the carbonation valve 264 is closed,
- the pump 220 is turned on.

In the mineralization mode, the aqueous liquid stored in the tank 202 flows through the mineralizer 214, then through the purifying system 203, then through the UV light 210 then is redirected to the tank 202. As a consequence, the aqueous liquid is not only purified but its amount of minerals is increased by the mineralizer 214.

### 3.7.4) Dispensing mode

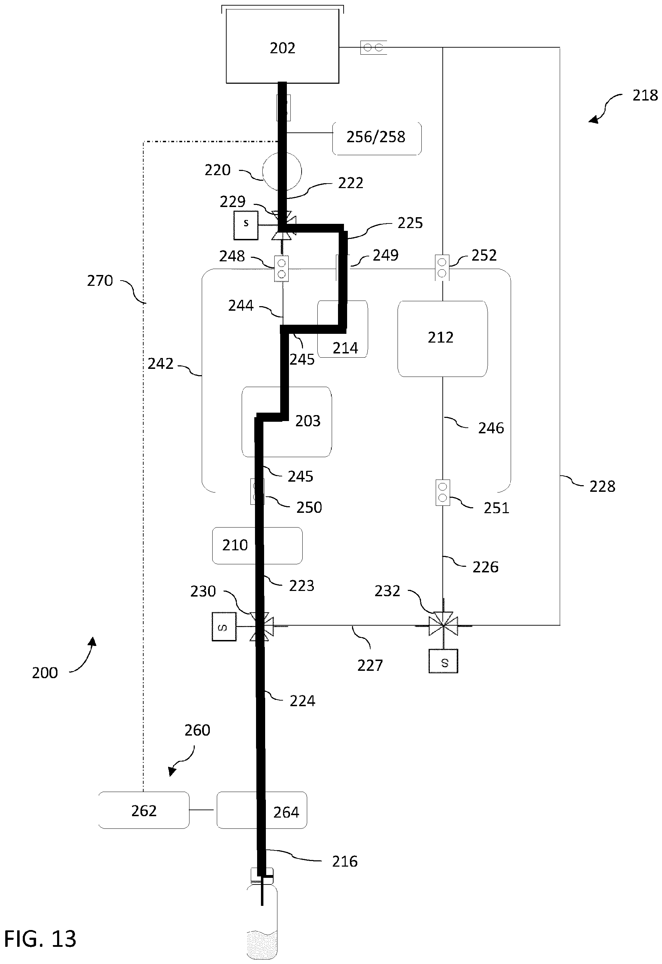

Referring to **figure 13**, the circuit 218 is further configurable into a dispensing mode wherein the circuit 218 forms a path fluidically connecting the tank 202 to the outlet 216, such that the aqueous liquid flows from the tank 202 to the outlet 216.

In the system 200, the dispensing mode is obtained as follows:

- the valve 229 is set in the first position (interconnecting the main line 222 and the purification line 223),
- the dispense valve 230 is set in the first position (interconnecting the purification line 223 and dispense line 224),
- the carbonation valve 264 is optionally open,
- the pump 220 is turned on.

The path is actually formed by the main line 222, the purification line 223 and the dispense line 224.

In the dispensing mode, the aqueous liquid stored in the tank 202 flows through the purification system 203 then through the UV light 210 before reaching the outlet 216. In other words, the aqueous liquid is purified again before being dispensed to a user. Besides, the aqueous liquid is optionally carbonated using the carbonation system 260.

Optionally, a gas line 270 is bringing carbon dioxide from carbonator to line 222 in order to further increase the aqueous liquid acidity by increasing its carbonic acid content. Consequently, the mineralizer 214 will release more minerals and the aqueous liquid minerality will increase even further.

### 3.7.5) Switching logic between modes

The controller in charge of switching the circuit 218 between the modes described above, by controlling the valves and the pump 220. The controller is configured to apply the logic described above in section 1.7.5 in relation with the system 1 (first embodiment).

### 4) System according to a fourth embodiment

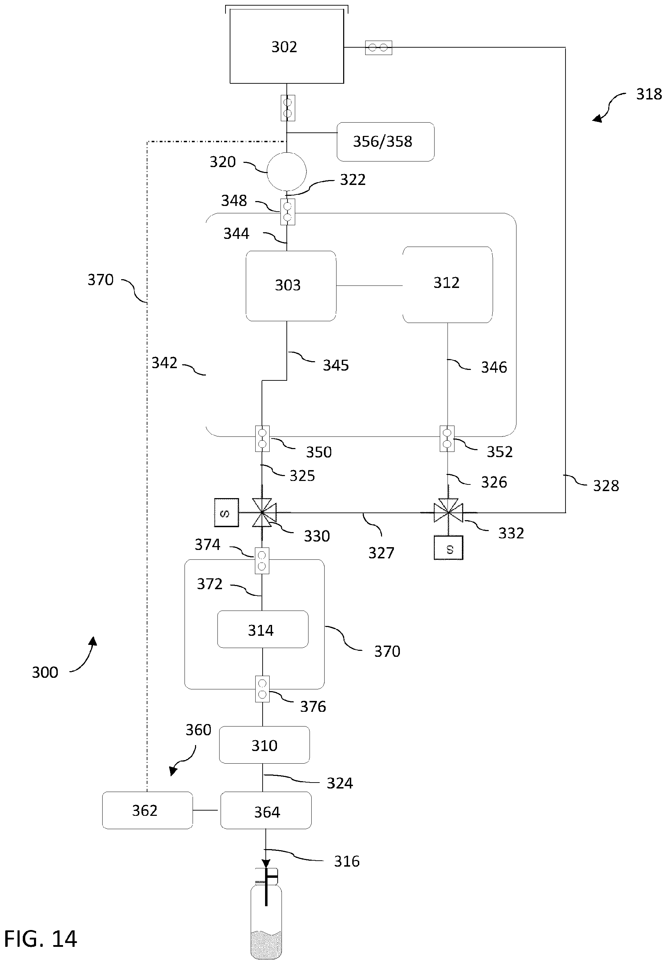

A system 300 according to a fourth embodiment is shown in **figure 14.**

Like the system 1 according to the first embodiment, the system 300 according to the fourth embodiment comprises:

- a tank 302 for storing an aqueous liquid,
- a purification system 303 configured to purify the aqueous liquid without substantially modifying the amount of minerals of the aqueous liquid,
- a demineralizer 312 and a mineralizer 314,
- an outlet 316 for dispensing the aqueous liquid to a user, and
- a circuit 318.

### 4.1) Tank / outlet

The tank 302 has the same function as the tank 2 in system 1 and may have the same structure.

The outlet 316 has the same function as the outlet 16 in system 1 and may have the same structure.

### 4.2) Purifier(s)

The purification system 303 has the same function as the purification system 3 of system 1 and may have the same structure.

The system further comprises an UV light 310. The UV light 310 has the same function as the UV light 10 of system 1 and may have the same properties.

### 4.3) Minerality modifying device(s)

The demineralizer 312 has the same function as the demineralizer 12 of system 1 and may have the same structure.

Besides, the mineralizer 314 has the same function as mineralizers 14 and may have the same structure. The mineralizer 314 may be a solid mineralizer, like mineralizer 114, and may have the same structure.

### 4.4) Circuit

The circuit 318 comprises a pump 320. The pump 320 has the same function as pump 20 of system 1 and may have the same structure.

The circuit 318 comprises pipes defining a main line 322. The main line 322 includes the tank 302 and the purifying system 303 arranged in series. In addition, the pump 320 is included in the main line 322, for example between the tank 302 and the purifying system 303.

The circuit 318 further defines a dispensing line 324 including the mineralizer 314, and the UV light 310 and the outlet 316.

The circuit 318 further defines an intermediate line 325, a demineralizing line 326 including the demineralizer 312, a first return line 327, and a second return line 328.

The circuit 318 further comprises a first 3-way valve 330 (or dispense valve) located between the intermediate line 325 and the dispense line 324. The first valve 330 is configurable into:

- a first position wherein the first valve 330 fluidically connects the intermediate line 325 to the dispensing line 324, thereby redirecting the aqueous liquid from the intermediate line 325 to the dispensing line 324, and
- a second position wherein the first valve 330 fluidically connects the intermediate line 325 to the first return line 327, thereby redirecting the aqueous liquid from the mineralization line 325 to the first return line 327 and preventing the aqueous liquid from reaching the outlet 316.

The circuit 318 further comprises a second 3-way valve 332. The second valve 332 is arranged upstream the demineralizer 312. The second valve 332 is configurable into:

- a first position wherein the second valve 332 fluidically connects the first return line 327 to the second return line 328, thereby redirecting the aqueous liquid from the first return line 327 to the second return line 328, and
- a second position wherein the second valve 332 fluidically connects the demineralization line 326 to the second return line 328, thereby redirecting the aqueous liquid from the demineralization line 326 to the second return line 328.

The circuit 318 may further comprise a vent or a drain configured to reduce a pressure in the main line 322, and a pressure relief valve controlling said pressure reduction.

### 4.5) Removable cartridges

The system 300 further comprises a first cartridge 342 constituting an item which can be removed from the system 300 and replaced by another cartridge in the system 300. The cartridge 342 comprises at least one purifier of the system 300 and at least one minerality modifying device.

In the system 300, the first cartridge 342 comprises a first line 344, a second line 345 and a third line 346.

The first line 344 comprises: an inlet 348 for inputting the aqueous liquid into the cartridge 342 and at least one purifier arranged upstream the first valve.

The second line 345 comprises a first outlet 350 for outputting the aqueous liquid outside the cartridge 342 once the aqueous liquid has been purified by the cartridge 342.

The third line 346 comprises the demineralizer 312 and a second outlet 352 for outputting the aqueous liquid outside the cartridge 342 once the aqueous liquid has been purified and demineralized by the cartridge 342.

When the cartridge 342 is placed in the system 300, the first line 344 forms a portion of the main line 322, the second line 345 forms a portion of the intermediate line 325 and the third line 346 forms a portion of the demineralization line 326.

The system 300 further comprises a second cartridge 370, independent from the first cartridge 342, and constituting another item with can removed from the system 300 and replaced by another cartridge in the system 300. The second cartridge 370 comprises at least one minerality modifying device.

More precisely, the second cartridge 370 comprises the mineralizer 314.

The second cartridge comprise a single line 372. The single line 372 comprises: an inlet 374 for inputting the aqueous liquid into the second cartridge 370, the mineralizer 314, and an outlet 376 for outputting the aqueous liquid outside the second cartridge 370 once the aqueous liquid has been mineralized by the mineralizer 314.

### 4.6) Other components

The system 300 further comprises a minerality sensor 356. The minerality sensor 356 has the same function as the sensor 56 of system 1 and may sense the same parameter or a different parameter.

The system 300 further comprises a temperature sensor 358. The temperature sensor 358 has the same function as the temperature sensor 58 of the system 1.

The system 300 further comprises a carbonation system 360. The carbonation system 360 has the same function as the carbonation system 60 of system 1 and may have the same structure. In particular, the carbonation system 360 comprises a carbonation source 362 storing carbon dioxide and a carbonation valve 364 controlling an amount of carbon dioxide stored in the carbonation source 362 to be mixed with aqueous liquid dispensed to a user via the outlet 316.

The system 300 further comprises a user interface (not illustrated) having the same function as the interface of system 1 already discussed above.

The system 300 further comprises a controller (not illustrated) having the same function as the controller of system 1 already discussed above. The controller of system 300 is configured to receive data from the sensors 356, 358 and from the user interface. The controller is further configured to control the first valve, the valves 330, 332, 364 and the pump 320.

### 4.7) Functioning modes of the system

Like the circuit 18 of system 1, the circuit 318 is configurable in different modes implementing different interconnections between some of the components of system 300.

### 4.7.1) Idle mode

The circuit 318 is configurable into an idle mode wherein the aqueous liquid stagnates at least in the tank 302.

In the system 300, the idle mode is obtained as follows:

- the dispense valve 330 is set in the second position (interconnecting the intermediate line 325 and the first return line 327),
- the valve 332 is set in the first position (interconnecting the first return line 327 and the second return line 328),
- the carbonation valve 364 is closed,
- the pump 320 is turned off.

### 4.7.2) Purification mode

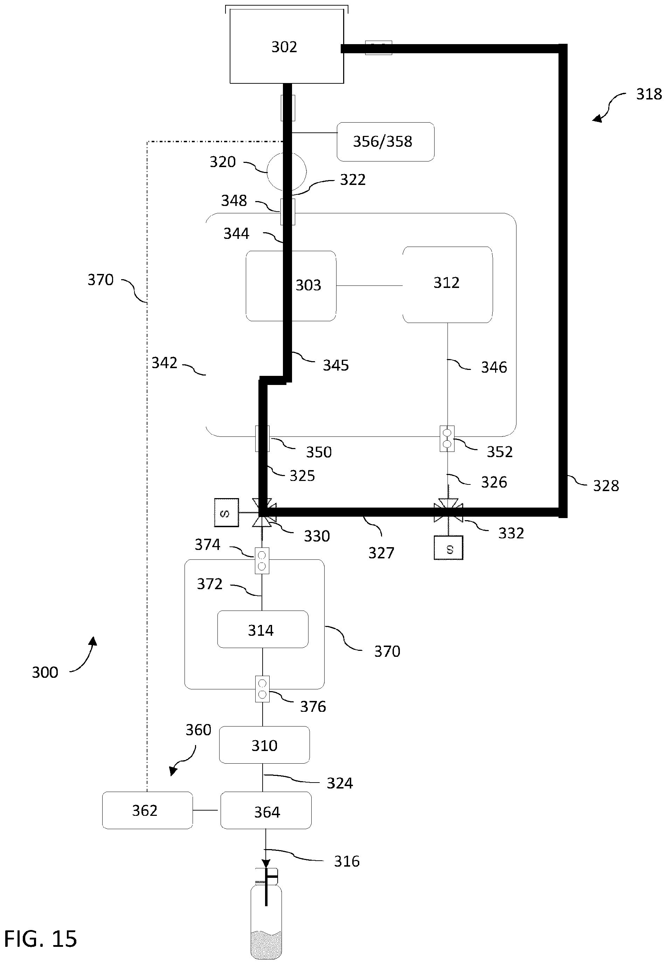

Referring to **figure 15**, the circuit 318 is configurable in a purification mode wherein the circuit 318 forms a first closed loop fluidically connecting at least one purifier (the purification system 303) to the tank 302, circulates the aqueous liquid in the first closed loop such that the aqueous liquid flows through the purifier (the purification system 303) and through the tank 302, and prevents the aqueous liquid from reaching the outlet 316 and from substantially modifying the amount of minerals of the aqueous liquid.

In fact, when the circuit 318 is configured in the purification mode, the aqueous liquid flowing in the first closed loop is prevented from reaching the demineralizer 312 and from reaching the mineralizer 314. As a consequence, the demineralizer 312 and the mineralizer cannot modify the amount of mineral.

In the system 300, the purification mode is obtained as follows:

- the dispense valve 330 is set in the second position (interconnecting the intermediate line 325 and the first return line 327),
- the valve 332 is set in the first position (interconnecting the first return line 327 and the second return line 328),
- the carbonation valve 364 is closed,
- the pump 320 is turned on.

The first closed loop is actually formed by the main line 322, the intermediate line 325, the first return line 327 and the second return line 328.

In the purification mode, the aqueous liquid stored in the tank 302 flows through the purifying system 303. Then the aqueous liquid is redirected to the tank 302. As a consequence, the aqueous liquid is purified, but the amount of minerals of the aqueous liquid does not substantially changes.

### 4.7.3) Minerality modifying modes

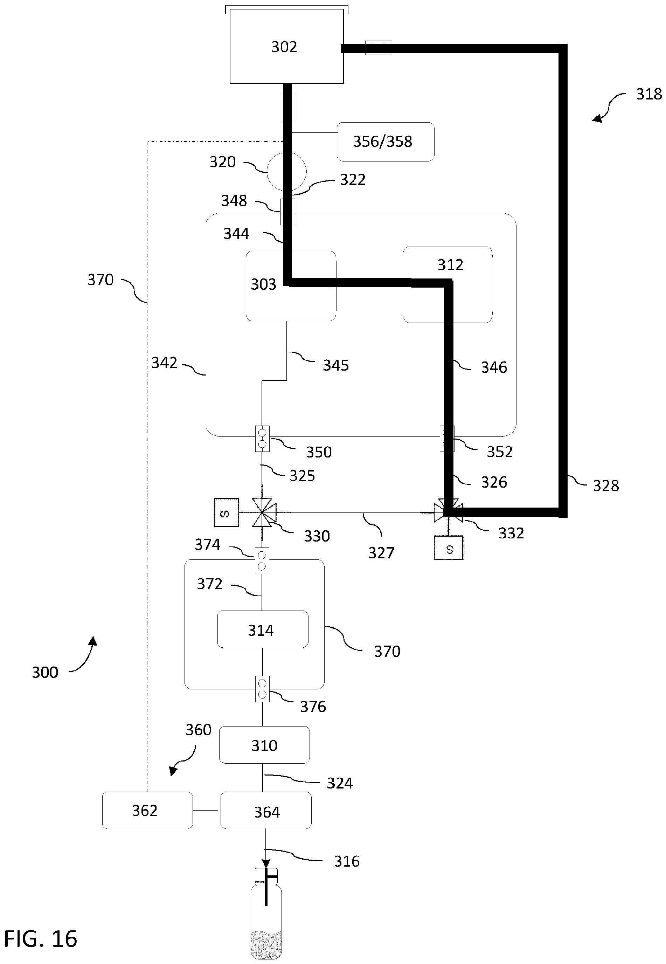

Referring to **figure 16**, the circuit 318 is configurable in a minerality modifying mode wherein the circuit 318 forms a second closed loop fluidically connecting a minerality modifying device of the system 300 to the tank 302, circulates the aqueous in the second closed loop such that the aqueous liquid flows through the minerality modifying device and through the tank 302, and prevents the aqueous liquid from reaching the outlet 316.

More precisely, the minerality modifying mode is a demineralization mode, which means that the minerality modifying device included in the second closed loop is the demineralizer 312. Besides, in the demineralization mode, the aqueous liquid is not mineralized by the mineralizer 314 since it is prevented from reaching the mineralizer 314.

In the system 300, the demineralization mode is obtained as follows:

- the dispense valve 330 is set in the second position (interconnecting the main line 322 and the first return line 327),
- the valve 332 is set in the second position (interconnecting the demineralization line 326 and the second return line 328),
- the carbonation valve 364 is closed,
- the pump 320 is turned on.

The second closed loop is actually formed by the main line 322, the demineralization line 326, the valve 332 and the second return line 328.

In the demineralization mode, the aqueous liquid stored in the tank 302 flows through the purifying system 303, then is redirected to the demineralizer 312 then to the tank 302 by means of the valve assembly 330 and 332. As a consequence, the aqueous liquid is not only purified but its amount of minerals is decreased by the demineralizer 312.

### 4.7.4) Dispensing mode

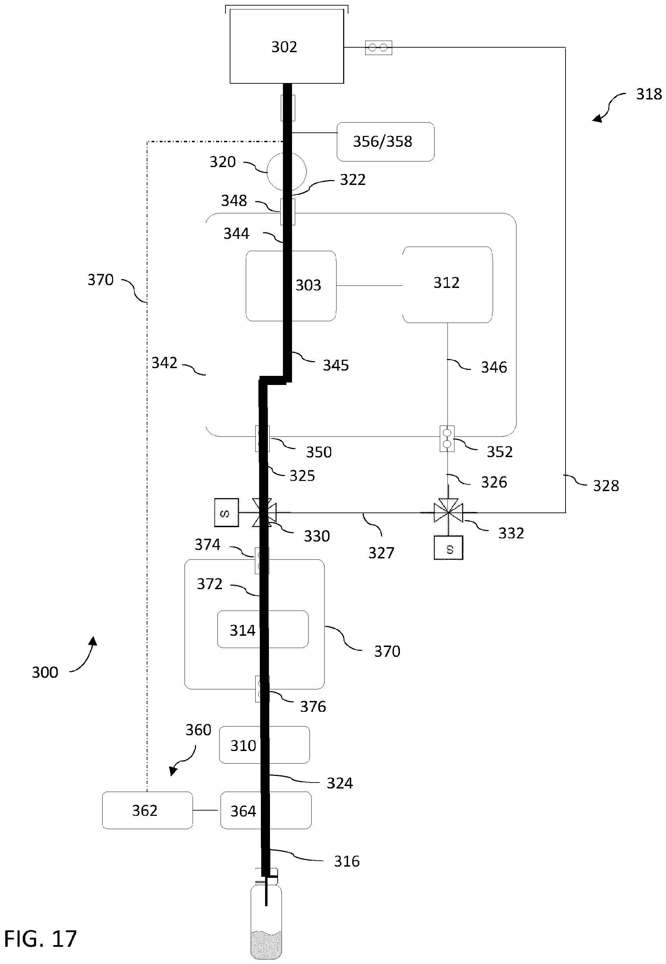

Referring to **figure 17**, the circuit 318 is further configurable into a dispensing mode wherein the circuit 318 forms a path fluidically connecting the tank 302 to the outlet 316, such that the aqueous liquid flows from the tank 302 to the outlet 316.

In the system 300, the dispensing mode is obtained as follows:

- the dispense valve 330 is set in the first position (interconnecting the intermediate line 325 and the dispense line 324),
- the carbonation valve 364 is optionally open,
- the pump 320 is turned on.

The path is actually formed by the main line 322, the dispense valve 330 and the dispense line 324.

In the dispensing mode, the aqueous liquid stored in the tank 302 flows through the purifying system 303, the mineralizer 314 and the UV light 310 before reaching the outlet 316. In other words, the aqueous liquid is purified again, and its amount of minerals is increased by the demineralizer 314 before being dispensed to a user. Besides, the aqueous liquid is also optionally carbonated using the carbonation system 360.

Optionally, a gas line 370 is bringing carbon dioxide from carbonator to line 322 in order to further increase the aqueous liquid acidity by increasing its carbonic acid content. Consequently, the mineralizer 314 will release more minerals and the aqueous liquid minerality will increase even further.

### 4.7.5) Switching logic between modes

The controller is in charge of switching the circuit 318 between the modes described above, by controlling the valves and the pump 320. The controller is configured to apply the logic described above in section 1.7.5 in relation with the system 1 (first embodiment).

### 5) System according to a fifth embodiment

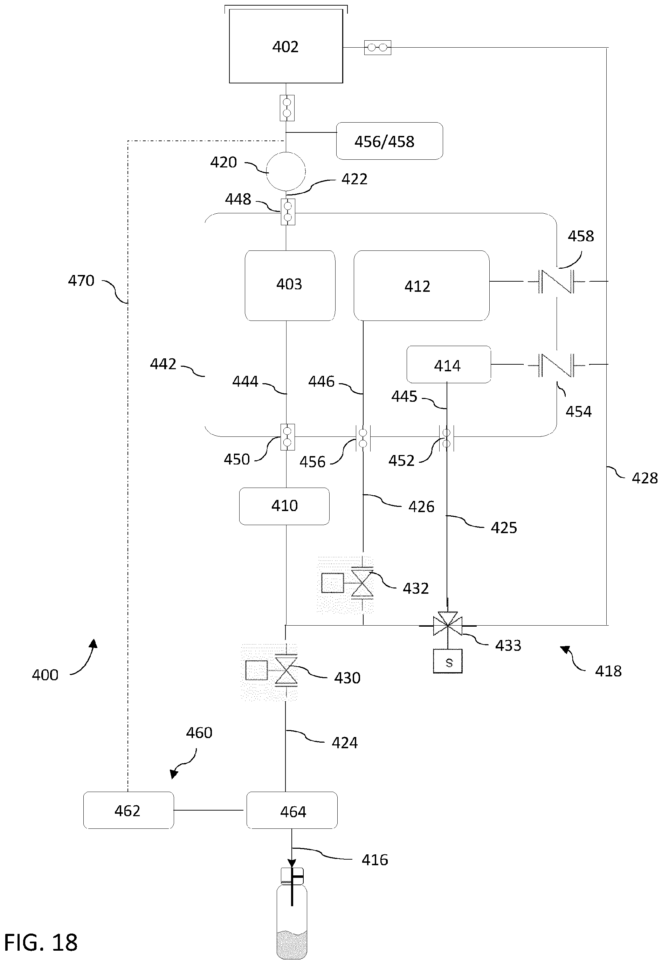

A system 400 according to a fifth embodiment is shown in **figure 18.**

The system 400 according to the fifth embodiment comprises:

- a tank 402 for storing an aqueous liquid,
- a purification system 403 configured to purify the aqueous liquid without substantially modifying the amount of minerals of the aqueous liquid,
* a demineralizer 412 and a mineralizer 414,
* an outlet 416 for dispensing the aqueous liquid to a user, and
* a circuit 418.

### 5.1) Tank / outlet

The tank 402 has the same function as the tank 2 in system 1 and may have the same structure.
The outlet 416 has the same function as the outlet 16 in system 1 and may have the same structure.

### 5.2) Purifier(s)

The purification system 403 has the same function as the purification system 3 of system 1 and may have the same structure.
The system further comprises an UV light 410. The UV light 410 has the same function as the UV light 10 of system 1 and may have the same properties.

### 5.3) Minerality modifying device(s)

The demineralizer 412 has the same function as the demineralizer 12 of system 1 and may have the same structure.
Besides, the mineralizer 414 has the same function as mineralizers 14 and may have the same structure. The mineralizer 414 may be a solid mineralizer, like mineralizer 114, and may have the same structure.

### 5.4) Circuit

The circuit 418 comprises a pump 420. The pump 420 has the same function as pump 20 of system 1 and may have the same structure.
The circuit 418 comprises pipes defining a main line 422 (or purification line 422). The main line 422 includes the tank 402, the purification system 403 and the UV light 410. In addition, the pump 420 is included in the main line 422.
The circuit 418 further defines a dispensing line 424 including the outlet 416.
The circuit 418 further defines a demineralizing line 426 including the demineralizer 412, a mineralizing line 425 including the mineralizer 414, and a return line 428. All lines 426, 425 and 428 are connected to tank 402. The return line 428 bypasses the mineralizer 414 and the demineralizer 412.
The circuit 418 further comprises a 3-way valve 433 located between the purification line 422 and the return line 428. The valve 433 is configurable into:

* a first position wherein the valve 433 fluidically connects the purification line 422 to the return line 428, thereby redirecting the aqueous liquid from the purification line 422 to the return line 428, and

* a second position wherein the valve 433 fluidically connects the purification line 422 to the mineralization line 425, thereby redirecting the aqueous liquid from the purification line 423 to the mineralization line 425.

The valve 430 is for instance arranged downstream the UV light 410. The valve 430 prevent the aqueous liquid from reaching the outlet 416 when the valve 430 is closed.
The circuit 418 further comprises a valve assembly configurable into:

* a first configuration wherein the valve assembly fluidically connects the purification line 422 to the return line 428, thereby redirecting the aqueous liquid from the purification line 422 to the return line 428, and preventing the aqueous liquid from reaching the outlet 416, and
* a second configuration wherein the valve assembly fluidically connects the purification line 422 to the demineralization line 426, thereby redirecting the aqueous liquid from the purification line 422 to the demineralization line 426, and preventing the aqueous liquid from reaching the outlet 416, and
* a third configuration wherein the valve assembly fluidically connects the purification line 422 to the mineralization line 425, thereby redirecting the aqueous liquid from the purification line 422 to the mineralization line 425, and preventing the aqueous liquid from reaching the outlet 416, and
* a fourth configuration wherein the valve assembly disconnects the purification line from all lines 425, 426, 428, thereby preventing the aqueous liquid present in the purification line to return to the tank 402. In this configuration, the valve 433 is in the second position and the resistance of the mineralization line 425 is superior to the resistance of line 424 thus preventing the aqueous liquid from flowing to the mineralizer 414 and thereby back to the tank 402.

The valve assembly may comprise three valves 430, 432, 433 as shown in figure 18. The dispense valve 430 controls whether the aqueous liquid can reach or not the outlet 416, the valve 432 controls whether the aqueous liquid can reach or not the demineralizer 412 and the valve 433 controls whether the aqueous liquid can reach or not the mineralizer 414.
The valves 430, 432, 433 may be solenoid valves. The valve 433 is a 3-way valve.
The circuit 418 may further comprise a vent or a drain configured to reduce a pressure in the main line 422, and a pressure relief valve controlling said pressure reduction.

### 5.5) Removable cartridge

The system 400 further comprises a cartridge 442 constituting an item which can be removed from the system 400 and replaced by another cartridge in the system 400. The cartridge 442 comprises at least one purifier of the system 400 and at least one minerality modifying device, like the cartridge 442.

More precisely, the cartridge 442 includes the purifying system 403, the demineralizer 412 and the mineralizer 414.

The cartridge 442 comprises a first line 444, a second line 445 separate from the first line, and a third line 446 separate from lines 444, 445.

The first line 444 comprises: a first inlet 448 for inputting the aqueous liquid into the cartridge 442, the purification system 403, and a first outlet 450 for outputting the aqueous liquid outside the cartridge 442 once the aqueous liquid has been purified by the cartridge 442.

The second line 445 comprises: a second inlet 452, the mineralizer 414 and a second outlet 454 for outputting the aqueous liquid outside the cartridge 442 once the aqueous liquid has been mineralized by the mineralizer 414. The second outlet 454 may comprise a valve to control the opening and the closing of the second outlet 454, for instance a check valve.

The third line 446 comprises: a third inlet 456, the demineralizer 412 and a third outlet 458 for outputting the aqueous liquid outside the cartridge 442 once the aqueous liquid has been demineralized by the demineralizer 412. The third outlet 458 may comprise a valve to control the opening and the closing of the third outlet 458, for instance a check valve.

When the cartridge is placed in the system 400, the first line 444 forms a portion of the purification line 422, the second line 445 forms a portion of the mineralization line 425 and the third line 446 forms a portion of the demineralization line 426.

**5.6) Other components**

The system 400 further comprises a minerality sensor 456. The minerality sensor 456 has the same function as the sensor 56 of system 1 and may sense the same parameter or a different parameter.

The system 400 further comprises a temperature sensor 458. The temperature sensor 458 has the same function as the temperature sensor 58 of the system 1.

The system 400 further comprises a carbonation system 460. The carbonation system 460 has the same function as the carbonation system 60 of system 1 and may have the same structure. In particular, the carbonation system 460 comprises a carbonation source 462 storing carbon dioxide and a carbonation valve 464 controlling an amount of carbon dioxide stored in the carbonation source 462 to be mixed with aqueous liquid dispensed to a user via the outlet 416.

The system 400 further comprises a user interface (not illustrated) having the same function as the interface of system 1 already discussed above.

The system 400 further comprises a controller (not illustrated) having the same function as the controller of system 1 already discussed above. The controller of system 400 is configured to receive data from the sensors 456, 458 and from the user interface. The controller is further configured to control the valves 430, 432, 433 and 464 and the pump 420.

**5.7) Functioning modes of the system**

Like the circuit 18 of system 1, the circuit 418 is configurable in different modes implementing different interconnections between some of the components of system 400.

**5.7.1) Idle mode**

The circuit 418 is configurable into an idle mode wherein the aqueous liquid stagnates at least in the tank 402.

In the system 400, the idle mode is obtained as follows:

- the dispense valve 430 is closed,
- the valve assembly formed by valves 432, 433 is set in the first configuration (interconnecting the purification line 422 and the return line 428),
- the carbonation valve 464 is closed,
- the pump 420 is turned off.

**5.7.2) Purification mode**

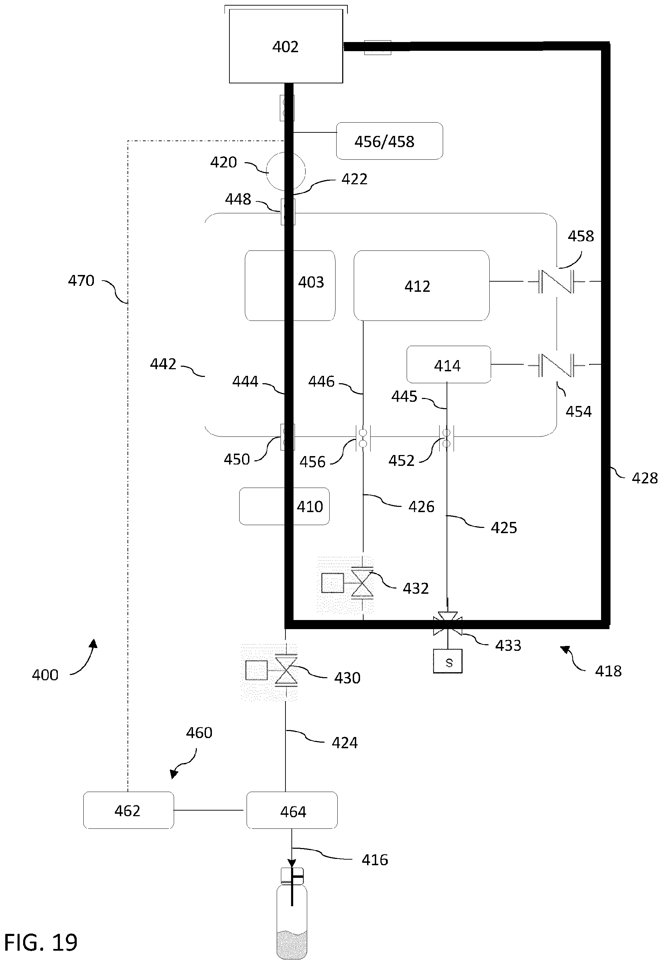

Referring to **figure 19**, the circuit 418 is configurable in a purification mode wherein the circuit 418 forms a first closed loop fluidically connecting at least one purifier (the purification system 403) to the tank 402, by circulating the aqueous liquid in the first closed loop such that the aqueous liquid flows through the purifier (the purification system 403) and through the tank 402, and prevents the aqueous liquid from reaching the outlet 416 and from substantially modifying the amount of minerals of the aqueous liquid.

In fact, when the circuit 418 is configured in the purification mode, the aqueous liquid flowing in the first closed loop is prevented from reaching the demineralizer 412 and from reaching the mineralizer 414. As a consequence, the demineralizer 412 and the mineralizer 414 cannot modify the amount of mineral of the aqueous liquid flowing in the first closed loop.

In the system 400, the purification mode is obtained as follows:

- the dispense valve 430 is closed,
- the valve assembly formed by valves 432, 433 is set in the first configuration,
- the carbonation valve 464 is closed,
- the pump 420 is turned on.

The first closed loop is actually formed by the purification line 422 and the return line 428.

In the purification mode, the aqueous liquid stored in the tank 402 flows through the purifying system 403, then the UV light 410, then is redirected to the tank 402. As a consequence, the aqueous liquid is purified, but the amount of minerals of the aqueous liquid does not substantially changes.

### 5.7.3) Minerality modifying modes

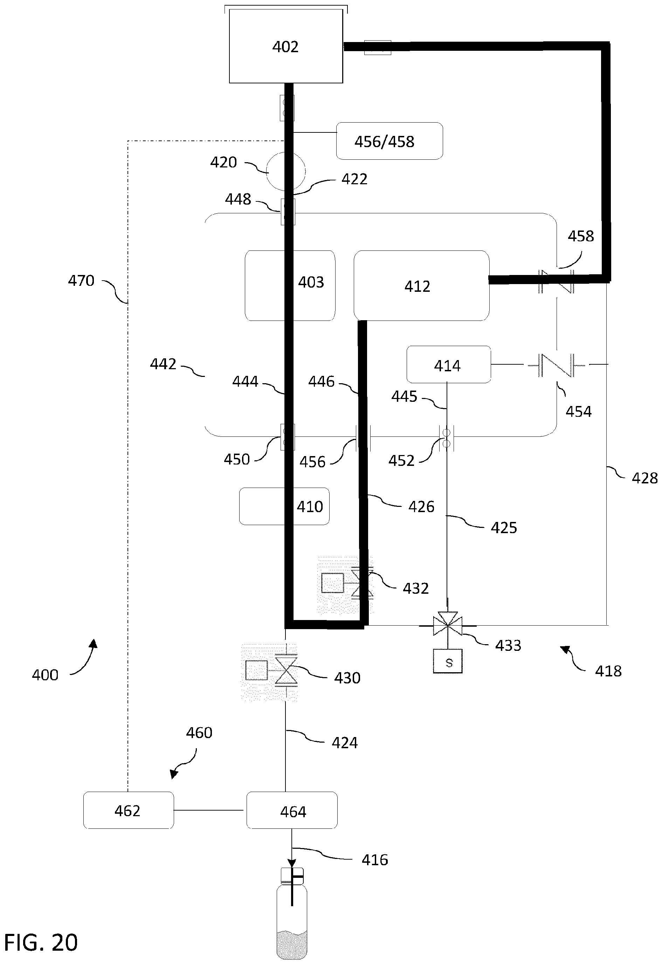

Referring to **figure 20**, the circuit 418 is configurable in a minerality modifying mode wherein the circuit 418 forms a second closed loop fluidically connecting a minerality modifying device of the system 400 to the tank 402, by circulating the aqueous in the second closed loop such that the aqueous liquid flows through the minerality modifying device and through the tank 402 and prevents the aqueous liquid from reaching the outlet 416.

More precisely, the minerality modifying mode is a demineralization mode, which means that the minerality modifying device included in the second closed loop is the demineralizer 412. Besides, in the demineralization mode, the aqueous liquid is not mineralized by the mineralizer 414 since it is prevented from reaching the mineralizer 414.

In the system 400, the demineralization mode is obtained as follows:

- the dispense valve 430 is closed,
- the valve assembly formed by valves 432, 433 is set in the second configuration (interconnecting the purification line 422 and the demineralization line 426),
- the carbonation valve 464 is closed,
- the pump 420 is turned on.

The second closed loop is actually formed by the purification line 422 and the demineralization line 426.

In the demineralization mode, the aqueous liquid stored in the tank 402 flows through the purifying system 403, then through the UV light 410 then through the demineralizer 412 then is redirected to the tank 402. As a consequence, the aqueous liquid is not only purified but its amount of minerals is decreased by the demineralizer 412.

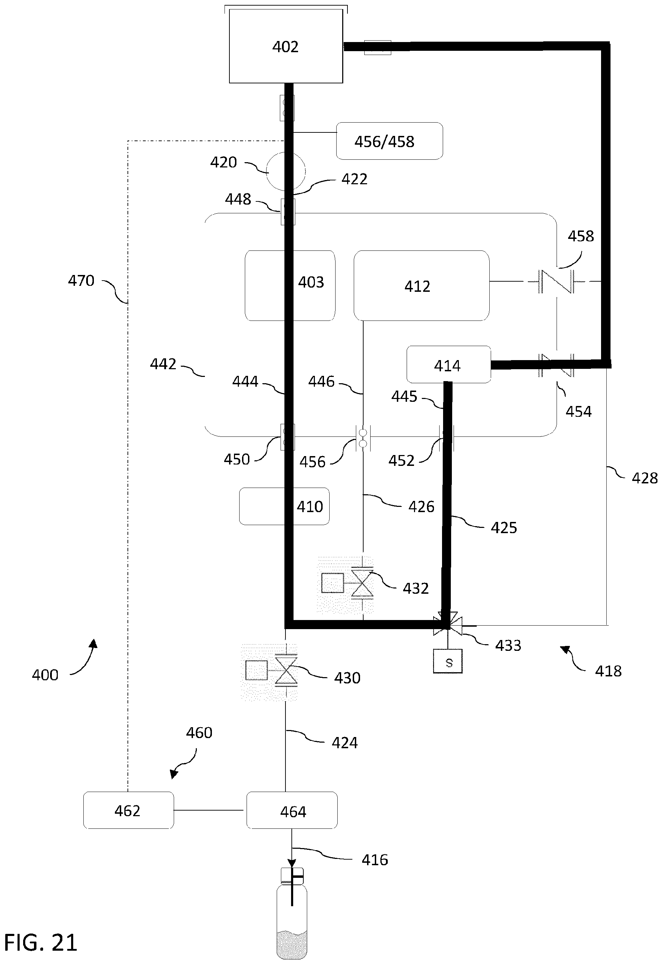

Referring to **figure 21**, the circuit 418 is configurable in a second minerality modifying mode wherein the circuit 418 forms a third closed loop fluidically connecting a second minerality modifying device of the system 400 to the tank 402, circulates the aqueous liquid in the third closed loop such that the aqueous liquid flows through the second minerality modifying device and through the tank 402, and prevents the aqueous liquid from reaching the outlet 416.

The second minerality modifying mode is a mineralization mode, which means that the minerality modifying device included in the third closed loop is the mineralizer 414. Besides, in the mineralization mode the aqueous liquid is not demineralized by the demineralizer 412 since it is prevented from reaching the demineralizer 412.

In the system 400, the mineralization mode is obtained as follows:

- the dispense valve 430 is closed,
- the valve assembly formed by valves 432, 433 is set in the third configuration (interconnecting the purification line 422 and the mineralization line 425),
- the carbonation valve 464 is closed,
- the pump 420 is turned on.

In the mineralization mode, the aqueous liquid stored in the tank 402 flows through the purifying system 403, then through the UV light 410 then through the mineralizer 414, then is redirected to the tank 402. As a consequence, the aqueous liquid is not only purified but its amount of minerals is increased by the mineralizer 414.

### 5.7.4) Dispensing mode

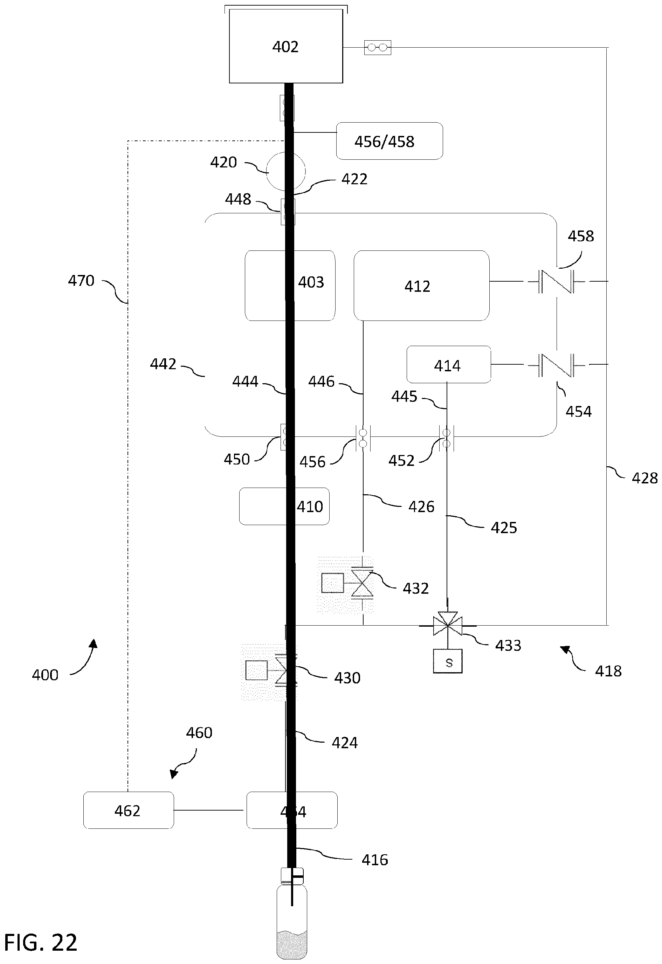

Referring to **figure 22**, the circuit 418 is further configurable into a dispensing mode wherein the circuit 418 forms a path fluidically connecting the tank 402 to the outlet 416, such that the aqueous liquid flows from the tank 402 to the outlet 416.

In the system 400, the dispensing mode is obtained as follows:

- the dispense valve 430 is open,
- the valve assembly formed by valves 432, 433 is set in the fourth position,
- the carbonation valve 464 is optionally open,
- the pump 420 is turned on.

The path is actually formed by the main (purification) line 422 and the dispense line 424.

In the dispensing mode, the aqueous liquid stored in the tank 402 flows through the purification system 403 then through the UV light 410 before reaching the outlet 416. In other words, the aqueous liquid is purified again before being dispensed to a user. Besides, the aqueous liquid is also optionally carbonated using the carbonation system 460.

Optionally, a gas line 470 is bringing carbon dioxide from carbonator to line 422 in order to further increase the aqueous liquid acidity by increasing its carbonic acid content. Consequently, the mineralizer 414 will release more minerals and the aqueous liquid minerality will increase even further.

### 5.7.5) Switching logic between modes

The controller is in charge of switching the circuit 418 between the modes described above, by controlling the valves and the pump 420. The controller is configured to apply the logic described above in section 1.7.5 in relation with the system 1 (first embodiment).

## 6. Other aspects

Further aspects of the present disclosure are defined in the following clauses.

Clause 1: A cartridge comprising:

- a first line comprising:

    o a first inlet for inputting a first aqueous liquid into the cartridge,

    o a purifier configured to purify the first aqueous liquid without substantially modifying the amount of minerals,

    o a first outlet for outputting the first aqueous liquid outside the cartridge once the first aqueous liquid has been purified by the purifier,

- a second line separate from the first line, the second line comprising:

    o a second inlet for inputting a second aqueous liquid into the cartridge,

    o a minerality modifying device configured to substantially modify the amount of minerals in the second aqueous liquid, and

    o a second outlet for outputting the aqueous liquid outside the cartridge once the second aqueous liquid has been treated by the minerality modifying device.

Clause 2: The cartridge of the preceding clause, wherein the minerality modifying device is a demineralizer configured to decrease the amount of minerals in the second aqueous liquid.

Clause 3: The cartridge of any one of the preceding clauses, wherein the first line comprises a second minerality modifying device configured to change the amount of minerals in the first aqueous liquid, wherein one of the minerality modifying device and the second minerality modifying device is a demineralizer, and the other of the minerality modifying device and the second minerality modifying device is a mineralizer.

Clause 4: The cartridge of the preceding clause, wherein the second minerality modifying device comprises a dealkalization resin arranged to capture calcium and magnesium cations associated with bicarbonate anions, such as a weak acid cation resin.

Clause 5: The cartridge of anyone of clauses 3 and 4, wherein the mineralizer stores a liquid mineral concentrate to be mixed with the first aqueous liquid, the liquid mineral concentrate comprising a material selected from the group consisting of: sodium or potassium bicarbonate; sodium or potassium carbonate; calcium or magnesium bicarbonate; calcium, magnesium, sodium or potassium chloride; magnesium, sodium or potassium sulfate, and combinations thereof.

Clause 6: The cartridge of any one of the preceding clauses, wherein the purifier comprises at least one of the following components:

- an activated carbon,

- an ion exchange resin or adsorption media or chelating media,

- a microfilter.

Clause 7: A system comprising:

- a tank for storing an aqueous liquid having an amount of minerals,

- a cartridge according to any one of the preceding clauses, wherein the cartridge is a removable unit of the system,

- an outlet for dispensing the aqueous liquid to a user,

- a circuit configurable into:

    o a purification mode wherein the circuit forms a first closed loop fluidically connecting the purifier to the tank, circulates the aqueous liquid in the first closed loop such that the aqueous liquid flows through the purifier and through the tank, and prevents the aqueous liquid from reaching the outlet and from substantially modifying the amount of minerals,

    o a minerality modifying mode wherein the circuit forms a second closed loop fluidically connecting the minerality modifying device to the tank, circulates the aqueous in the second closed loop such that the aqueous liquid flows through the minerality modifying device and through the tank, and prevents the aqueous liquid from reaching the outlet,

    o a dispensing mode wherein the circuit forms a path fluidically connecting the tank to the outlet, such that the aqueous liquid flows from the tank to the outlet.

Clause 8: The system of the preceding clause, wherein the circuit prevents the aqueous liquid from reaching any minerality modifying device of the system when the circuit is configured in the purification mode.

Clause 9: The system of any one of clauses 7 and 8, wherein the second closed loop fluidically connects the purifier to the minerality modifying device and to the tank, such that the aqueous circulating in the second closed loop also flows through the minerality modifying device.

Clause 10: The system of any one of clauses 7 to 9, comprising a sensor for sensing a parameter depending of the amount of minerals in the aqueous liquid, the parameter being for example a conductivity, and a controller configured to switch the circuit from the minerality modifying mode to the purification mode once that the parameter has reached a target value.

Clause 11: The system of any one of clauses 7 to 10, comprising a timer for monitoring a time the circuit has been operating in the minerality modifying mode, and a controller configured to switch the circuit from the minerality modifying mode to the purification mode once the time has reached a maximum duration.

Clause 12: The system of any one of clauses 7 to 11, comprising a user interface and a controller configured to switch the circuit from the purification mode to the dispensing mode whenever the user interface detects that a user requests to be dispensed the aqueous liquid.

Clause 13: The system of any one of clauses 7 to 12, wherein the circuit defines:

- a minerality modifying line comprising the minerality modifying device,

- a bypass line bypassing the minerality modifying device,

and further comprises a valve assembly configurable into:

- a position wherein the valve assembly redirects at least a portion of the aqueous liquid in the minerality modifying line, and

- another position wherein the valve assembly redirects the aqueous liquid in the bypass line and prevents the aqueous liquid from being redirected in the minerality modifying device.

Clause 14: The system of the preceding clause, wherein the circuit further comprises a dispense valve distinct from the valve assembly, the dispense valve being configurable into:

- an open position allowing the aqueous liquid to reach the outlet, and

- a closed position preventing the aqueous liquid from reaching the outlet.

Clause 15: The system of any one of clauses 7 to 14, further comprising a second minerality modifying device configured to change the amount of minerals, wherein:

- one of the minerality modifying device and the second minerality modifying device is a demineralizer configured to decrease the amount of minerals, and

- the other of the minerality modifying device and the second minerality modifying device is a mineralizer configured to increase the amount of minerals, and

wherein the path formed by the circuit in the dispensing mode fluidically connects the second minerality modifying device to the tank, such that the aqueous liquid is treated by the second minerality modifying device when the aqueous flows from the tank to the outlet.

**Claims**

1. A system (1, 100, 200, 300, 400) comprising:

   • a tank (2, 102, 202, 302, 402) for storing an aqueous liquid having an amount of minerals,
   • a purifier (3, 103, 203, 303, 403) configured to purify the aqueous liquid without substantially modifying the amount of minerals,
   • a minerality modifying device (12, 112, 212, 312, 412) configured to substantially modify the amount of minerals in the aqueous liquid,
   • an outlet (16, 116, 216, 316, 416) for dispensing the aqueous liquid to a user,
   • a circuit (18, 118, 218, 318, 418) configurable into:

      o a purification mode wherein the circuit forms a first closed loop fluidically connecting the purifier (3, 103, 203, 303, 403) to the tank (2, 102, 202, 302, 402), circulates the aqueous liquid in the first closed loop such that the aqueous liquid flows through the purifier (3, 103, 203, 303, 403) and through the tank (2, 102, 202, 302, 402), and prevents the aqueous liquid from reaching the outlet (16, 116, 216, 316, 416) and from substantially modifying the amount of minerals,
      o a minerality modifying mode wherein the circuit (18) forms a second closed loop fluidically connecting the minerality modifying device to the tank, circulates the aqueous in the second closed loop such that the aqueous liquid flows through the minerality modifying device (12, 112, 212, 312, 412) and through the tank (2, 102, 202, 302, 402), and prevents the aqueous liquid from reaching the outlet (16, 116, 216, 316, 416),
      o a dispensing mode wherein the circuit forms a path fluidically connecting the tank (2, 102, 202, 302, 402) to the outlet (16, 116, 216, 316, 416), such that the aqueous liquid flows from the tank (2, 102, 202, 302, 402) to the outlet (16, 116, 216, 316, 416).

2. The system of any one of the preceding claims, wherein the circuit prevents the aqueous liquid from reaching any minerality modifying device of the system (1) when the circuit is configured in the purification mode.

3. The system of any one of the preceding claims, wherein the second closed loop fluidically connects the purifier (3, 103, 203, 303, 403) to the minerality modifying device (12, 112, 212, 312, 412) and to the tank (2, 102, 202, 302, 402), such that the aqueous circulating in the second closed loop also flows through the minerality modifying device (12, 112, 212, 312, 412).

4. The system of any one the preceding claims, comprising a sensor (56, 156, 256, 356, 456) for sensing a parameter depending of the amount of minerals in the aqueous liquid, the parameter being for example a conductivity of the aqueous liquid, and a controller configured to switch the circuit from the minerality modifying mode to the purification mode once that the parameter has reached a target value.

5. The system of any one of the preceding claims, comprising a timer for monitoring a time the circuit has been operating in the minerality modifying mode, and a controller configured to switch the circuit from the minerality modifying mode to the purification mode once the time has reached a maximum duration.

6. The system of any one of the preceding claims, comprising a user interface and a controller configured to switch the circuit from the purification mode to the dispensing mode whenever the user interface detects that a user requests to be dispensed the aqueous liquid.

7. The system of any one of the preceding claims, wherein the circuit (18) defines:

   • a minerality modifying line (26) comprising the minerality modifying device (12),
   • a bypass line (28) bypassing the minerality modifying device (12),

   and further comprises a valve assembly (32) configurable into:

   • a position wherein the valve assembly (32) redirects at least a portion of the aqueous liquid in the minerality modifying line (26), and
   • another position wherein the valve assembly (32) redirects the aqueous liquid in the bypass line (28) and prevents the aqueous liquid from being redirected in the minerality modifying device (12).

8. The system of the preceding claim, wherein the circuit (18) further comprises a dispense valve (30) distinct from the valve assembly (32), the dispense valve (30) being configurable into:

   • an open position allowing the aqueous liquid to reach the outlet (16), and
   • a closed position preventing the aqueous liquid from reaching the outlet (16).

9. The system of any one of the preceding claims, wherein the circuit (18, 118, 218, 318, 418) is further configurable in an idle mode wherein the aqueous liquid stagnates at least in the tank (2).

10. The system of any one of the preceding claims, wherein the path formed by the circuit in the dispensing mode fluidically connects at least one of the purifier (3, 103, 203, 303, 403) and the minerality modifying device (12, 112, 212, 312, 412) to the tank (2, 102, 202, 302, 402), such that the aqueous liquid is treated by at least one of the purifier (3, 103, 203, 303, 403) and the minerality modifying device (12, 112, 212, 312, 412) when the aqueous flows from the tank to the outlet (16, 116, 216, 316, 416).

11. The system of any one of the preceding claims, further comprising a removable cartridge (42, 124, 242, 342, 442) comprising at least one of the purifiers (3, 103, 203, 303, 403) and the minerality modifying device (12, 112, 212, 312, 412).

12. The system of the preceding claim, wherein the removable cartridge (42) comprises:

   • a first line (44) comprising: a first inlet (48) for inputting the aqueous liquid into the cartridge (42), the purifier (3), and a first outlet (50) for outputting the aqueous liquid outside the cartridge (42) once the aqueous liquid has been purified by the purifier (3),
   • a second line (46) separate from the first line (44), the second line (46) comprising:
   a second inlet (52) for inputting the aqueous liquid into the cartridge (42), the minerality modifying device (12), and a second outlet (54) for outputting the aqueous liquid outside the cartridge (42) once the aqueous liquid has been treated by the minerality modifying device (12).

13. The system of any one the preceding claims, wherein the minerality modifying device is a demineralizer (12, 112, 212, 312, 412) configured to decrease the amount of minerals in the aqueous liquid.

14. The system of any one of the preceding claims, comprising a second minerality modifying device (14, 114, 214, 314, 414) configured to change the amount of minerals, wherein:

• one of the minerality modifying device and the second minerality modifying device is a demineralizer configured to decrease the amount of minerals, and
• the other of the minerality modifying device and the second minerality modifying device is a mineralizer configured to increase the amount of minerals.

15. The system of the preceding claim in combination with any one of claims 11 and 12, wherein the removable cartridge (142, 242) further comprises the second minerality modifying device (114, 214).

16. The system of the preceding claim, wherein the second minerality modifying device (14, 114, 214, 314, 414) comprises a dealkalization resin arranged to capture calcium and magnesium cations associated with bicarbonate anions, such as a weak acid cation resin (WAC).

17. The system of any one of claims 15 and 16, wherein the path formed by the circuit (18, 118, 218, 318, 418) in the dispensing mode fluidically connects the second minerality modifying device (14, 114, 214, 314, 414) to the tank (2, 102, 202, 302, 402), such that the aqueous liquid is treated by the second minerality modifying device (14, 114, 214, 314, 414) when the aqueous flows from the tank (2, 102, 202, 302, 402) to the outlet (16, 116, 216, 316, 416).

18. The system of any one of claims 15 to 17, wherein the mineralizer (14) stores a liquid mineral concentrate to be mixed with the aqueous liquid, the liquid mineral concentrate comprising a material selected from the group consisting of: sodium or potassium bicarbonate; sodium or potassium carbonate; calcium or magnesium bicarbonate; calcium, magnesium, sodium or potassium chloride; magnesium, sodium or potassium sulfate, and combinations thereof.

19. The system of any one of claims 15 to 18, wherein the mineralizer (114, 214, 314, 414) stores a solid mineral configured to dissolve in the aqueous liquid.

20. The system of any one of claims 15 to 19, wherein:

• the minerality modifying device (112, 212, 312, 412) is configured to decrease pH of the aqueous liquid,
• the second minerality modifying device (114, 214, 314, 414) is configured to substantially change the amount of minerals of the aqueous liquid only if the pH of the aqueous liquid is lower than a threshold,
• the first closed loop fluidically connects the second minerality modifying device (114, 214, 314, 414) to the tank (102, 202, 302, 402), circulates the aqueous liquid in the first closed loop such that the aqueous liquid flows through the second minerality modifying device.

21. The system of any one of claims 15 to 20, wherein:

• the circuit (118, 218, 418) is configurable into a second minerality modifying mode wherein the circuit forms a third closed loop fluidically connecting the second minerality modifying device (114, 214, 414) to the tank (102, 202, 402), circulates the aqueous in the third closed loop such that the aqueous liquid flows through the second minerality modifying device (114, 214, 414) and through the tank (102, 202, 402), and prevents the aqueous liquid from reaching the outlet (116, 216, 416) and from reaching the minerality modifying device (112, 212, 412).

22. The system of any one of the preceding claims, wherein the purifier comprises at least one of the following components:

• an activated carbon (AC),
• an ion exchange resin or adsorption media or chelating media (HM-IX),
• a microfilter (MF),
• a UV light configured to irradiate the aqueous liquid with an UV radiation, the UV radiation preferably having a wavelength in the range going from 230 to 290 nanometers.

FIG. 1

FIG. 2

FIG. 3

FIG. 4

FIG. 5

FIG. 6

FIG. 7

FIG. 8

FIG. 9

FIG. 10

FIG. 11

FIG. 12

FIG. 13

FIG. 14

FIG. 15

FIG. 16

FIG. 17

FIG. 18

FIG. 19

FIG. 20

FIG. 21

FIG. 22

Europäisches
Patentamt

European
Patent Office

Office européen
des brevets

# EUROPEAN SEARCH REPORT

Application Number

EP 22 30 6023

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2009/283464 A1 (OE HANA [JP] ET AL) 19 November 2009 (2009-11-19) * figure 6 * * paragraphs [0006], [0065] – [0069], [0143] – [0146] * | 1–22 | INV. C02F1/68 C02F9/00 ADD. C02F1/28 |
| X | US 2015/010458 A1 (BURI MATTHIAS [CH] ET AL) 8 January 2015 (2015-01-08) * figure 2 * * paragraphs [0124] – [0127] * | 1–22 | C02F1/32 C02F1/42 C02F1/44 |
| X | JP 2002 138526 A (UENO KATSUHIRO) 14 May 2002 (2002-05-14) * figure 1 * * paragraphs [0031] – [0059] * | 1–22 | |
| X | JP H10 482 A (TIGER VACUUM BOTTLE CO LTD) 6 January 1998 (1998-01-06) * figures 1–5 * * paragraphs [0013] – [0034] * | 1–22 | |

TECHNICAL FIELDS
SEARCHED     (IPC)

C02F

The present search report has been drawn up for all claims

| Place of search | Date of completion of the search | Examiner |
|---|---|---|
| The Hague | 23 December 2022 | Onel Inda, Santiago |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 22 30 6023

This annex lists the patent family members relating to the patent documents cited in the above-mentioned European search report.
The members are as contained in the European Patent Office EDP file on
The European Patent Office is in no way liable for these particulars which are merely given for the purpose of information.

23-12-2022

| Patent document cited in search report | Publication date | Patent family member(s) | Publication date |
|---|---|---|---|
| US 2009283464 A1 | 19-11-2009 | JP 2008086989 A | 17-04-2008 |
| | | US 2009283464 A1 | 19-11-2009 |
| | | WO 2008001821 A1 | 03-01-2008 |
| US 2015010458 A1 | 08-01-2015 | AU 2013214265 A1 | 24-07-2014 |
| | | BR 112014017679 B1 | 17-11-2020 |
| | | CA 2862092 A1 | 08-08-2013 |
| | | CL 2014002023 A1 | 21-11-2014 |
| | | CN 104114497 A | 22-10-2014 |
| | | CR 20140320 A | 14-10-2014 |
| | | CY 1118788 T1 | 12-07-2017 |
| | | CY 1119027 T1 | 10-01-2018 |
| | | DK 2623466 T3 | 19-06-2017 |
| | | DK 2809619 T3 | 16-01-2017 |
| | | EA 201491464 A1 | 28-11-2014 |
| | | EP 2623466 A1 | 07-08-2013 |
| | | EP 2809619 A1 | 10-12-2014 |
| | | ES 2609090 T3 | 18-04-2017 |
| | | ES 2630173 T3 | 18-08-2017 |
| | | HK 1204784 A1 | 04-12-2015 |
| | | HR P20161659 T1 | 13-01-2017 |
| | | HR P20170839 T1 | 25-08-2017 |
| | | HU E032428 T2 | 28-09-2017 |
| | | HU E032933 T2 | 28-11-2017 |
| | | JP 5906330 B2 | 20-04-2016 |
| | | JP 2015513444 A | 14-05-2015 |
| | | KR 20140112535 A | 23-09-2014 |
| | | LT 2623466 T | 25-09-2017 |
| | | LT 2809619 T | 10-01-2017 |
| | | MA 35916 B1 | 01-12-2014 |
| | | MX 368811 B | 17-10-2019 |
| | | MY 170302 A | 17-07-2019 |
| | | PE 20141373 A1 | 16-10-2014 |
| | | PH 12014501524 A1 | 08-10-2014 |
| | | PL 2623466 T3 | 29-09-2017 |
| | | PL 2809619 T3 | 28-04-2017 |
| | | PT 2623466 T | 11-07-2017 |
| | | PT 2809619 T | 02-01-2017 |
| | | SG 11201403881U A | 28-08-2014 |
| | | US 2015010458 A1 | 08-01-2015 |
| | | WO 2013113807 A1 | 08-08-2013 |
| JP 2002138526 A | 14-05-2002 | JP 4472857 B2 | 02-06-2010 |
| | | JP 2002138526 A | 14-05-2002 |
| JP H10482 A | 06-01-1998 | JP H10482 A | 06-01-1998 |

EPO FORM P0459

For more details about this annex : see Official Journal of the European Patent Office, No. 12/82

**page 1 of 2**

## ANNEX TO THE EUROPEAN SEARCH REPORT
## ON EUROPEAN PATENT APPLICATION NO.

EP 22 30 6023

This annex lists the patent family members relating to the patent documents cited in the above-mentioned European search report.
The members are as contained in the European Patent Office EDP file on
The European Patent Office is in no way liable for these particulars which are merely given for the purpose of information.

23-12-2022

| Patent document cited in search report | Publication date | Patent family member(s) | Publication date |
|---|---|---|---|
| | | JP 3403580 B2 | 06-05-2003 |

For more details about this annex : see Official Journal of the European Patent Office, No. 12/82

EPO FORM P0459

page 2 of 2